# EUROPEAN PATENT APPLICATION

(11) **EP 4 503 695 A1**
(43) Date of publication of application: **05.02.2025**
(21) Application number: 23778851.8
(22) Date of filing: 03.02.2023
(51) Int. Cl.: H04W 16/26, H04W 92/20, H04B 7/15, H04W 76/10, H04W 48/10, H04W 84/12, H04W 28/06

(54) **WIRELESS COMMUNICATION DEVICE**

(30) Priority: 31.03.2022 JP 2022058097
(71) Applicant: Sony Group Corporation, Tokyo 108-0075 (JP)
(72) Inventor: TANAKA, Yusuke, Tokyo 108-0075 (JP)
(74) Representative: D Young & Co LLP
(86) International application number: PCT/JP2023/003545
(87) International publication number: WO 2023/188815

(57) **Abstract**

Connection establishment that involves a relay in which some of the functions related to wireless communication is limited compared with an access point is realized.

A wireless communication device includes a connection establishment processing unit and a communication control processing unit. The connection establishment processing unit performs a connection establishment process of establishing a first connection to a wireless terminal via a relaying device in which the function of referring to the content of data in a frame to be used in wireless communication are limited. After establishment of the first connection, the communication control processing unit performs a process of controlling communication with the wireless terminal via the relaying device. The wireless communication device may perform, with the wireless terminal, wireless communication of a signal including information to be used in establishing the first connection, on the basis of establishment of a second connection.

## Description

### TECHNICAL FIELD

The present technology relates to a wireless communication device. More particularly, the present technology relates to a wireless communication device that performs wireless communication via a wireless relaying device.

### BACKGROUND ART

To extend the communication range of a wireless network or increase the throughput by an access point (AP) incorporating technique, such as joint transmission (JT), a plurality of access points may be installed and operated in cooperation. In this cooperative operation, access points having a function related to a series of wireless communications and a function of connecting to a wide area network (WAN) or the like through a wire are used. At this point, a remote radio head (RRH) in which some of the functions related to wireless communication are limited compared with the access points is used, so that a reduction in device cost, installation in a place where a wired connection is not possible, and a reduction in delay by skipping some internal processes can be expected (see Patent Document 1, for example).

### CITATION LIST

### PATENT DOCUMENT

Patent Document 1: Japanese Translation of PCT International Application Publication No. 2014-508464

### SUMMARY OF THE INVENTION

### PROBLEMS TO BE SOLVED BY THE INVENTION

However, in the above-described conventional technology, it is assumed that the RRH is connected to an eNB (base station) by a wire such as a fiber cable or an X2 backhaul. Therefore, by the above-described conventional technology, it is not possible to realize establishment of a connection using an RRH and an eNB in a wireless manner.

The present technology has been made in view of such circumstances, and aims to realize establishment of a connection that involves a wireless relay in which some of the functions related to wireless communication are limited compared with an access point.

### SOLUTIONS TO PROBLEMS

The present technology has been made to solve the above problems, and a first aspect thereof is a wireless communication device that includes: a connection establishment processing unit that performs a connection establishment process of establishing a first connection to a wireless terminal via a relaying device in which a function of referring to content of data in a frame to be used in wireless communication is limited; and a communication control processing unit that performs a process of controlling communication with the wireless terminal via the relaying device, after establishment of the first connection. This brings about an effect of providing wireless communication via a relaying device in which the function of referring to the content of data in a frame to be used in wireless communication is limited.

Also, in the first aspect, the frame may be a media access control (MAC) frame. This brings about an effect that some of the functions related to wireless communication of the relaying device are limited compared with the access point to which the wireless terminal is connected.

Further, in the first aspect, the connection establishment processing unit may perform the connection establishment process on the basis of establishment of a second connection to the relaying device. This brings about an effect of providing a sequence for establishing a connection between the access point and the wireless terminal via the relaying device in which the function of referring to the content of the data in the frame to be used in wireless communication is limited.

Furthermore, in the first aspect, the connection establishment processing unit may perform a process of generating information regarding whether to establish a connection in response to a connection request from the relaying device. This brings about an effect of enabling establishment of a connection between the access point and the wireless terminal via the relaying device in which the function of referring to the content of the data in the frame to be used in wireless communication is limited.

Also, in the first aspect, the connection establishment processing unit performs a request process on another access point capable of an operation as the relaying device, the request process being a process of requesting for an operation as the relaying device. This brings about an effect of enabling the access point to operate as the relaying device in which the function of referring to the content of the data in the frame to be used in wireless communication is limited.

Further, the first aspect may broadcast a signal including at least one piece of information indicating a capability of connecting to the relaying device or information indicating a capability of operating as the relaying device. This brings about an effect of providing wireless communication via a relaying device in which the function of referring to the content of data in a frame to be used in wireless communication is limited.

Furthermore, in the first aspect, wireless communication of a signal including information to be used in establishing the second connection may be performed with the relaying device. This brings about an effect of providing wireless communication via a relaying device in which the function of referring to the content of data in a frame to be used in wireless communication is limited.

Also, the first aspect may perform, with the wireless terminal, wireless communication of a signal including information to be used in establishing the first connection, on the basis of establishment of the second connection. This brings about an effect of providing wireless communication between the access point and the wireless terminal via the relaying device in which the function of referring to the content of the data in the frame to be used in wireless communication is limited.

Further, in the first aspect, the destination of the signal including information to be used in establishing the first connection may be the relaying device. This brings about an effect that a connection between the wireless terminal and the access point is established, on the basis of wireless communication directed to the relaying device in which the function of referring to the content of the data in the frame to be used in wireless communication is limited.

Furthermore, a second aspect is a wireless communication device that includes: a connection establishment processing unit that performs a connection establishment process of establishing a first connection to an access point, on the basis of a connection request indicating that a function of referring to content of data in a frame to be used in wireless communication is limited; and a relay processing unit that performs a process of relaying communication between a wireless terminal and the access point, after establishment of the first connection. This brings about an effect of providing wireless communication via a relaying device in which the function of referring to the content of data in a frame to be used in wireless communication is limited.

Also, in the second aspect, the frame may be a MAC frame. This brings about an effect that some of the functions related to wireless communication of the relaying device are limited compared with the access point to which the wireless terminal is connected.

Further, the second aspect may broadcast a signal including information indicating that the wireless communication device is operating as a relaying device for communication between the wireless terminal and the access point. This brings about an effect of providing wireless communication via a relaying device in which the function of referring to the content of data in a frame to be used in wireless communication is limited.

Furthermore, the second aspect may broadcast an operation parameter of the access point and an operation parameter as the relaying device. This brings about an effect of providing a sequence for establishing a connection between the access point and the wireless terminal, with the destination being the relaying device in which the function of referring to the content of the data in the frame to be used in wireless communication is limited.

Also, in the second aspect, a connection establishment signal that is transmitted from the access point and indicates establishment of a connection between the access point and the wireless terminal may be wirelessly transferred to the wireless terminal, and a connection establishment signal that is transmitted from the wireless terminal and indicates establishment of a connection between the access point and the wireless terminal may be wirelessly transferred to the access point. This brings about an effect that a connection between the access point and the wireless terminal is established on the basis of wireless communication with the relaying device.

Further, in the second aspect, the connection establishment signal may include a signal related to a connection request from the wireless terminal to the access point, and a signal related to a response from the access point to the connection request from the wireless terminal. This brings about an effect that a connection between the access point and the wireless terminal via the relaying device is established.

Furthermore, a third aspect is a wireless communication device that includes: a connection establishment processing unit that performs a connection establishment process of establishing a first connection to an access point via a relaying device, on the basis of a connection request for a connection to the access point, the connection request being directed to the relaying device in which the function of referring to the content of data in a frame to be used in wireless communication is limited; and a communication control processing unit that performs a process of controlling communication with the access point via the relaying device, after establishment of the first connection. This brings about an effect of providing wireless communication between the wireless terminal and the access point, on the basis of wireless communication directed to the relaying device in which the function of referring to the content of the data in the frame to be used in wireless communication is limited.

Also, in the third aspect, the frame may be a MAC frame. This brings about an effect that some of the functions related to wireless communication of the relaying device are limited compared with the access point to which the wireless terminal is connected.

Further, in the third aspect, wireless communication of a connection establishment signal to be used in establishing the first connection may be performed with the relaying device. This brings about an effect of providing wireless communication via a relaying device in which the function of referring to the content of data in a frame to be used in wireless communication is limited.

Furthermore, in the third aspect, the connection establishment signal may include a signal related to a connection request to the access point, and a signal related to a response from the access point to the connection request. This brings about an effect that a connection between the access point and the wireless terminal via the relaying device is established.

Also, in the third aspect, the signal related to the connection request to the access point may include information regarding an extension of a timeout from transmission of the signal related to the connection request, to reception of the signal related to the response. This brings about an effect that the time allocated to establishment of a connection between the access point and the wireless terminal via the relaying device is prolonged.

### BRIEF DESCRIPTION OF DRAWINGS

Fig. 1 is a block diagram illustrating an example configuration of a wireless communication system according to a first embodiment.
Fig. 2 is a block diagram illustrating an example configuration of an access point according to the first embodiment.
Fig. 3 is a block diagram illustrating an example configuration of a relaying device according to the first embodiment.
Fig. 4 is a block diagram illustrating an example configuration of a wireless terminal according to the first embodiment.
Fig. 5 is a diagram illustrating MAC functions that are applied to a relaying device according to the first embodiment.
Fig. 6 is a sequence diagram illustrating a first example of procedures for establishing a connection between an access point and a relaying device according to the first embodiment.
Fig. 7 is a sequence diagram illustrating a second example of procedures for establishing a connection between an access point and a relaying device according to the first embodiment.
Fig. 8 is a diagram illustrating an example of the format of a signal including information to be broadcast from an access point according to the first embodiment.
Fig. 9 is a diagram illustrating an example of the format of a signal including information to be used in establishing a connection between an access point and a relaying device according to the first embodiment.
Fig. 10 is a diagram illustrating an example of a method for decoding information to be used in establishing a connection between an access point and a relaying device according to the first embodiment.
Fig. 11 is a diagram illustrating an example of the format of a signal included in an RRH action field that is used in establishing a connection between an access point and a relaying device according to the first embodiment.
Fig. 12 is a sequence diagram illustrating procedures for establishing a connection between an access point and a wireless terminal via a relaying device according to the first embodiment.
Fig. 13 is a diagram illustrating an example of the format of a signal including information that is broadcast from a relaying device according to the first embodiment.
Fig. 14 is a diagram illustrating an example of the format of a signal including information regarding a connection request from a wireless terminal to an access point via a relaying device according to the first embodiment.
Fig. 15 is a block diagram illustrating an example configuration of an access point according to a second embodiment.
Fig. 16 is a block diagram illustrating an example configuration of a wireless terminal according to the second embodiment.
Fig. 17 is a sequence diagram illustrating encryption procedures in establishing a connection between an access point and a wireless terminal via a relaying device according to the second embodiment.
Fig. 18 is a diagram illustrating an example of the format of an EAPOL-Key signal that is used in encryption procedures according to the second embodiment.
Fig. 19 is a block diagram illustrating an example configuration of a wireless communication device that is used as a first example application.
Fig. 20 is a block diagram illustrating an example configuration of a wireless communication module of the wireless communication device that is used as the first example application.
Fig. 21 is a block diagram illustrating an example configuration of a wireless communication device that is used as a second example application.
Fig. 22 is a block diagram illustrating an example configuration of a wireless communication device that is used as a third example application.
Fig. 23 is a block diagram illustrating an example configuration of a wireless communication device that is used as a fourth example application.

### MODE FOR CARRYING OUT THE INVENTION

In the description below, modes for carrying out the present technology (hereinafter referred to as embodiments) will be described. The description will be given in the following order.
1. First embodiment (an example in which an access point and a wireless terminal are wirelessly connected via a relaying device in which the function of referring to the contents of the data in a frame to be used in wireless communication is limited)
2. Second embodiment (an example in which a security setting signal for communication between an access point and a wireless terminal having a connection established via a relaying device is transmitted and received)
3. First example application (an example in which a module other than a wireless communication module is provided in a wireless communication device)
4. Second example application (an example in which a wireless communication device is applied to a smartphone)
5. Third example application (an example in which a wireless communication device is applied to an in-vehicle device)
6. Fourth example application (an example in which a wireless communication device is applied to a wireless AP that has a wired communication interface)

### <1. First Embodiment>

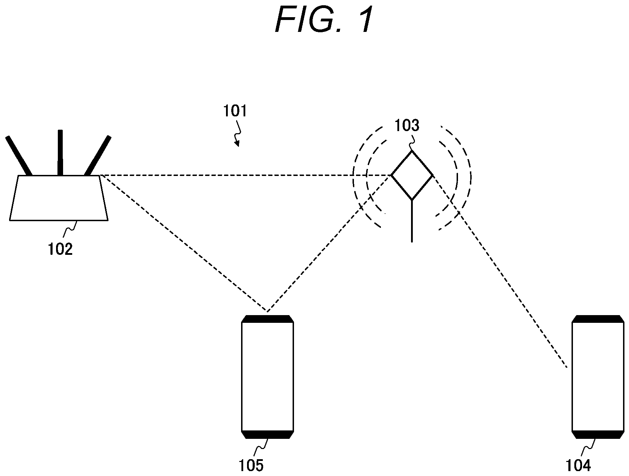

Fig. 1 is a block diagram illustrating an example configuration of a wireless communication system according to a first embodiment.

In the drawing, a wireless communication system 101 includes an access point 102, a relaying device 103, and wireless terminals 104 and 105. The wireless communication system 101 can be applied to a wireless local area network (LAN), for example.

The access point 102 operates as a connection destination of each of the wireless terminals 104 and 105. In doing so, the access point 102 can perform wireless communication with the wireless terminal 104 via the relaying device 103, on the basis of establishment of a connection to the wireless terminal 104. The access point 102 can establish a connection to the wireless terminal 104, on the basis of exchange of connection establishment signals with the wireless terminal 104 having the relaying device 103 as a destination.

Also, the access point 102 may perform wireless communication with the wireless terminal 105 via the relaying device 103, or may perform wireless communication with the wireless terminal 105 without the relaying device 103 being interposed, on the basis of establishment of a connection to the wireless terminal 105. The access point 102 can operate as a wireless communication device corresponding to a master device or a base station in a wireless LAN. The access point 102 is a Wi-Fi (registered trademark) router, for example.

The relaying device 103 relays wireless communication performed by each of the wireless terminals 104 and 105 and the access point 102. At this point of time, the relaying device 103 can relay a signal including information to be used in establishing a connection between each of the wireless terminals 104 and 105 and the access point 102, on the basis of establishment of a connection to the access point 102.

In the relaying device 103, some of the functions related to wireless communication are limited, compared with the access point 102. At this point of time, the relaying device 103 may have a limited function of referring to the contents of data in a frame to be used in wireless communication. The data in the frame is the payload portion in the frame. In the case of a MAC frame, the data portion (payload portion) is also called the MAC service data unit (MSDU) according to the IEEE802.11 standard. For example, in limiting some of the functions related to wireless communication, a process of referring to an address and a header, an error detection process, and a retransmission control process may be performed, and a process of referring to the contents of the data may not be performed. At this point of time, in the relaying device 103, the function of referring to the contents of the data in the frame to be used in the process of encrypting some of the MAC functions may be limited. The relaying device 103 can operate as a wireless communication device that corresponds to a remote radio head (RRH). The relaying device 103 may be a Wi-Fi router in which some of the functions related to wireless communication are limited compared with the access point 102, or may be a relay-dedicated device in which some of the functions related to wireless communication are limited compared with the access point 102, for example.

Each of the wireless terminals 104 and 105 operates as the point to which the access point 102 is connected. In doing so, the wireless terminal 104 can perform wireless communication with the access point 102 via the relaying device 103, on the basis of establishment of a connection to the access point 102. The wireless terminal 105 may perform wireless communication with the access point 102 via the relaying device 103, or may perform wireless communication with the access point 102 without the relaying device 103 being interposed, on the basis of establishment of a connection to the access point 102.

Here, each of the wireless terminals 104 and 105 can perform a process of establishing a connection to the access point 102 via the relaying device 103, on the basis of a request for a connection to the access point 102, with the relaying device 103 being the destination. For example, in a case where a MAC address is allocated to the relaying device 103, each of the wireless terminals 104 and 105 can designate the MAC address of the relaying device 103 as a destination of the relaying device 103. In a case where any MAC address is not assigned to the relaying device 103, each of the wireless terminals 104 and 105 can designate the relaying device 103 as a destination, on the basis of information for uniquely identifying the relaying device 103. Each of the wireless terminals 104 and 105 can operate as a wireless communication device that corresponds to a slave unit or a station (STA) in the wireless LAN. Each of the wireless terminals 104 and 105 is a smartphone, for example.

Note that the number of wireless terminals 104 and 105 in the drawing is an example, and is not limited to this. Further, the number of relaying devices 103 in the drawing is also an example, and is not limited to this. For example, there may be two relaying devices connected to each other, and the respective wireless terminals 104 and 105 may be connected to the access point 102 via the two relaying devices. Alternatively, the wireless terminal 104 may be connected to the two relaying devices, instead of the access point 102.

In the following embodiment, for ease of explanation, a case where a connection between the access point 102 and the wireless terminal 104 via the relaying device 103 is taken as an example.

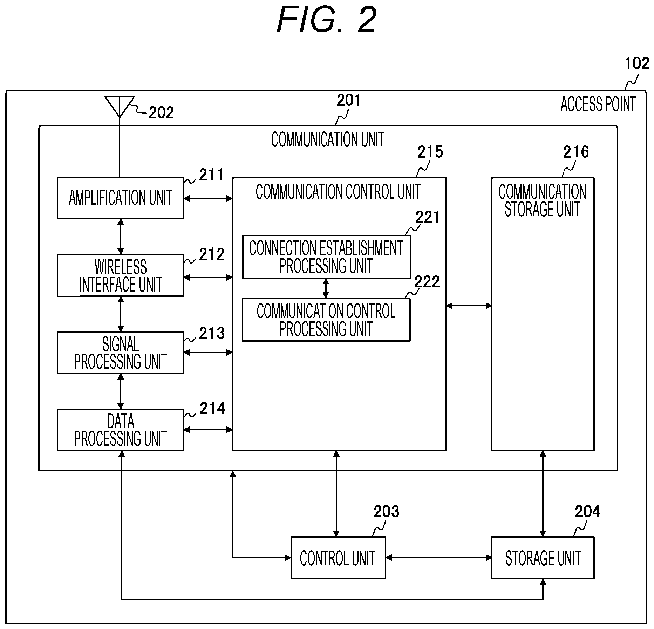

Fig. 2 is a block diagram illustrating an example configuration of an access point according to the first embodiment.

In the drawing, the access point 102 includes a communication unit 201, an antenna 202, a control unit 203, and a storage unit 204. The communication unit 201 includes an amplification unit 211, a wireless interface unit 212, a signal processing unit 213, a data processing unit 214, a communication control unit 215, and a communication storage unit 216. The communication control unit 215 includes a connection establishment processing unit 221 and a communication control processing unit 222. Note that the access point 102 is an example of a wireless communication device disclosed in the claims.

The communication unit 201 performs wireless communication with the wireless terminal 104 via the relaying device 103. At this point of time, the communication unit 201 can broadcast a signal including at least one piece of information indicating capability of connecting to the relaying device 103 or information indicating capability of operating as the relaying device 103. Also, the communication unit 201 can perform, with the relaying device 103, wireless communication of a signal including information to be used in establishing a connection to the relaying device 103. Further, the communication unit 201 can perform, with the wireless terminal 104, wireless communication of a signal including information to be used in establishing a connection to the wireless terminal 104 via the relaying device 103, on the basis of establishment of a connection to the relaying device 103.

The control unit 203 controls the communication unit 201 and the communication control unit 215. Note that the control unit 203 may also perform part of operation of the communication control unit 215. Furthermore, the control unit 203 and the communication control unit 215 may be designed as one block.

The storage unit 204 holds information to be used by the communication unit 201 and the control unit 203. Note that the storage unit 204 may also perform part of operation of the communication storage unit 216. The storage unit 204 and the communication storage unit 216 may be designed as one block.

The communication control unit 215 controls operation of each block and information transmission between the respective blocks. Also, the communication control unit 215 performs control to transfer, to each block, control information and management information to be sent as notifications to other communication devices. For example, the communication control unit 215 can control each block to perform establishment of a connection between the access point 102 and the relaying device 103, and generation, transmission, and reception of a frame necessary for the establishment of the connection. Furthermore, the communication control unit 215 can control each block to perform establishment of a connection between the access point 102 and the wireless terminal 104 via the relaying device 103, and generation, transmission, and reception of a frame necessary for the establishment of the connection.

The communication control unit 215 includes a connection establishment processing unit 221 and a communication control processing unit 222. The connection establishment processing unit 221 performs a process of establishing a connection to the wireless terminal 104 via the relaying device 103. At this point of time, the connection establishment processing unit 221 can perform a process of establishing a connection to the wireless terminal 104 via the relaying device 103, on the basis of establishment of a connection to the relaying device 103. To establish a connection to the relaying device 103, the connection establishment processing unit 221 can perform a process of generating information regarding whether to establish a connection in response to a connection request from the relaying device 103. Also, the connection establishment processing unit 221 can perform a process of requesting an operation as the relaying device 103 to another access point capable of an operation as the relaying device 103.

After establishment of a connection to the wireless terminal 104, the communication control processing unit 222 performs a process of controlling communication with the wireless terminal 104 via the relaying device 103.

The communication storage unit 216 holds information to be used by the communication control unit 215. Also, the communication storage unit 216 holds data to be transmitted and received data.

At a time of transmission, the data processing unit 214 can perform sequence management on the data held in the communication storage unit 216, and the control information and the management information received from the communication control unit 215, and perform an encryption process or the like to generate a data unit. Also, the data processing unit 214 can perform a channel access operation based on carrier sensing, addition of a MAC header to data to be transmitted, addition of an error detection code, and a process of concatenating a plurality of data units. Furthermore, at a time of reception, the data processing unit 214 performs a disconnection process, analysis, error detection, a retransmission request operation on the MAC header of a received data unit, and a decryption process and a reordering process on the data unit.

The signal processing unit 213 includes a transmission signal processing unit and a reception signal processing unit. The transmission signal processing unit can perform encoding, interleaving, modulation, and the like on a data unit, and adds a physical header thereto, to generate a symbol stream. The reception signal processing unit can analyze a physical header, and perform demodulation, deinterleaving, decoding, and the like on a symbol stream, to generate a data unit. Furthermore, the reception signal processing unit performs complex channel characteristics estimation and a spatial separation process as necessary.

The wireless interface unit 212 includes a transmission wireless interface unit and a reception wireless interface unit. The transmission wireless interface unit can perform digital-analog signal conversion, filtering, up-conversion, and phase control on a symbol stream, to generate a transmission signal. The reception wireless interface unit can perform downconversion, filtering, and analog-digital signal conversion on a reception signal, to generate a symbol stream.

The amplification unit 211 includes a transmission amplification unit and a reception amplification unit. The transmission amplification unit can amplify a signal that is input from the transmission wireless interface unit. The reception amplification unit can amplify a signal that is input from the antenna 202. Part of the amplification unit 211 may be a component located outside the communication unit 201. Further, part of the amplification unit 211 may be included in the wireless interface unit 212.

The wireless interface unit 212, the amplification unit 211, and the antenna 202 may form one set, and two or more sets may be components of the access point 102. The data processing unit 214 and the signal processing unit 213 may form one set, and two or more sets may be connected to one wireless interface unit 212. A plurality of communication units 201 or components thereof may be included so as to be able to receive signals of a plurality of communication systems. The communication unit 201 may be formed with one or more large scale integrated circuits (LSIs).

Note that the configuration of the communication unit 201 is an example, and is not limited to this. For example, the control unit 203 and the communication control unit 215 may include a processor. The processor may be a central processing unit (CPU) or a graphics processing unit (GPU). The processor may be a single-core processor or a multi-core processor. The control unit 203 and the communication control unit 215 may include a field-programmable gate array (FPGA) or an application specific integrated circuit (ASIC) that performs some or all of the processes.

The storage unit 204 and the communication storage unit 216 may include a semiconductor memory such as a static random access memory (SR_AM), a dynamic random access memory (DRAM), or a NAND flash memory, for example. The storage unit 204 and the communication storage unit 216 may hold a program to be executed by the processor, or may have a work area for the processor to execute the program.

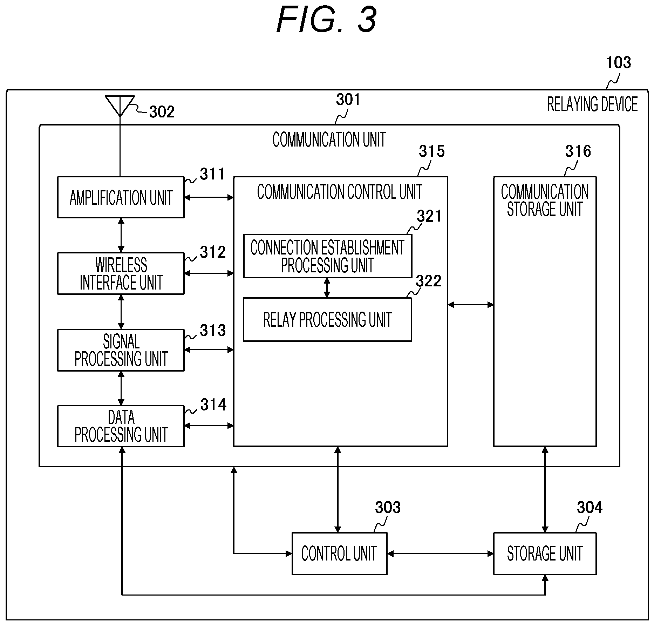

Fig. 3 is a block diagram illustrating an example configuration of a relaying device according to the first embodiment.

In the drawing, the relaying device 103 includes a communication unit 301, an antenna 302, a control unit 303, and a storage unit 304. The communication unit 301 includes an amplification unit 311, a wireless interface unit 312, a signal processing unit 313, a data processing unit 314, a communication control unit 315, and a communication storage unit 316. The communication control unit 315 includes a connection establishment processing unit 321 and a relay processing unit 322. Note that the relaying device 103 is an example of a wireless communication device disclosed in the claims.

The communication unit 301, the control unit 303, and the storage unit 304 can be designed in a manner similar to that for the communication unit 201, the control unit 203, and the storage unit 204 of the access point 102 described above. However, in a case where the relaying device 103 is a relay-dedicated device, some of the MAC functions of the communication unit 201 may not be included. Furthermore, the communication control unit 315 includes the connection establishment processing unit 321 and the relay processing unit 322, instead of the connection establishment processing unit 221 and the communication control processing unit 222 of the communication control unit 215 described above.

The connection establishment processing unit 321 performs a process of establishing a connection to the access point 102, on the basis of a connection request indicating that the function of referring to the contents of the data in a frame to be used in wireless communication is limited.

After establishment of a connection to the access point 102, the relay processing unit 322 performs a process of relaying communication between the wireless terminal 104 and the access point 102.

At this point of time, the communication unit 301 can broadcast a signal including information indicating that the communication unit 301 is operating as the relaying device 103 for communication between the wireless terminal 104 and the access point 102. Also, the communication unit 301 can report operation parameters of the access point 102 and operation parameters of the relaying device 103.

Further, the communication unit 301 can wirelessly transfer, to the wireless terminal 104, a signal that indicates connection establishment between the access point 102 and the wireless terminal 104, and is transmitted from the access point 102. Also, the communication unit 301 can wirelessly transfer, to the access point 102, a signal that indicates connection establishment between the access point 102 and the wireless terminal 104, and is transmitted from the wireless terminal 104. This connection establishment signal can include a signal related to a connection request from the wireless terminal 104 to the access point 102, and a signal related to a response from the access point 102 to the connection request from the wireless terminal 104.

Note that, in the relaying device 103, the data processing unit 314 may not have some of the functions of the data processing unit 214 of the access point 102 described above, or may have a function of turning off. Some of the functions of the data processing unit 214 may be a decryption process and a reorder process for a received data unit, for example.

Also, the relaying device 103 may not include the control unit 303, and may have a function of turning off the operation of the control unit 303. Further, the relaying device 103 may not include the storage unit 304, and may have a function of turning off the operation of the storage unit 304.

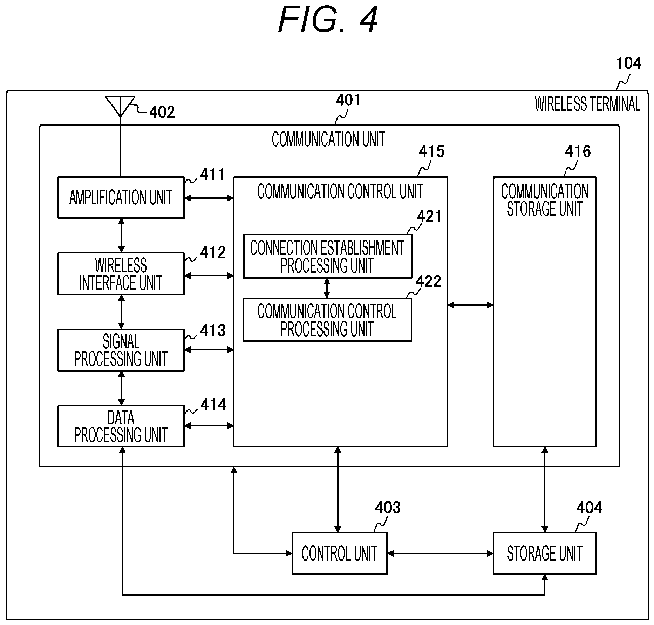

Fig. 4 is a block diagram illustrating an example configuration of a wireless terminal according to the first embodiment. Note that, in the drawing, the above-described configuration of the wireless terminal 104 is taken as an example, but the wireless terminal 105 can have a similar configuration.

In the drawing, the wireless terminal 104 includes a communication unit 401, an antenna 402, a control unit 403, and a storage unit 404. The communication unit 401 includes an amplification unit 411, a wireless interface unit 412, a signal processing unit 413, a data processing unit 414, a communication control unit 415, and a communication storage unit 416. The communication control unit 415 includes a connection establishment processing unit 421 and a communication control processing unit 422. Note that the wireless terminal 104 is an example of a wireless communication device disclosed in the claims.

The communication unit 401, the control unit 403, and the storage unit 404 can be designed in a manner similar to that for the communication unit 201, the control unit 203, and the storage unit 204 of the access point 102 described above. However, the communication control unit 415 includes the connection establishment processing unit 421 and the communication control processing unit 422, instead of the connection establishment processing unit 221 and the communication control processing unit 222 of the communication control unit 215 described above.

The connection establishment processing unit 421 performs a process of establishing a connection to the access point 102 via the relaying device 103, on the basis of a request for a connection to the access point 102, with the relaying device 103 being the destination.

After establishment of a connection to the access point 102 via the relaying device 103, the communication control processing unit 422 performs a process of controlling communication with the access point 102 via the relaying device 103.

At this point of time, the communication unit 401 can perform wireless communication of a connection establishment signal for establishing a connection to the access point 102, with the relaying device 103 being the destination. This connection establishment signal can include a signal related to a connection request for the access point 102, and a signal related to a response from the access point 102 to the connection request for the access point 102. The signal related to a connection request for the access point 102 can include information regarding an extension of the time-out from the time when the signal relating to the connection request is transmitted to the time when the signal relating to the response is received.

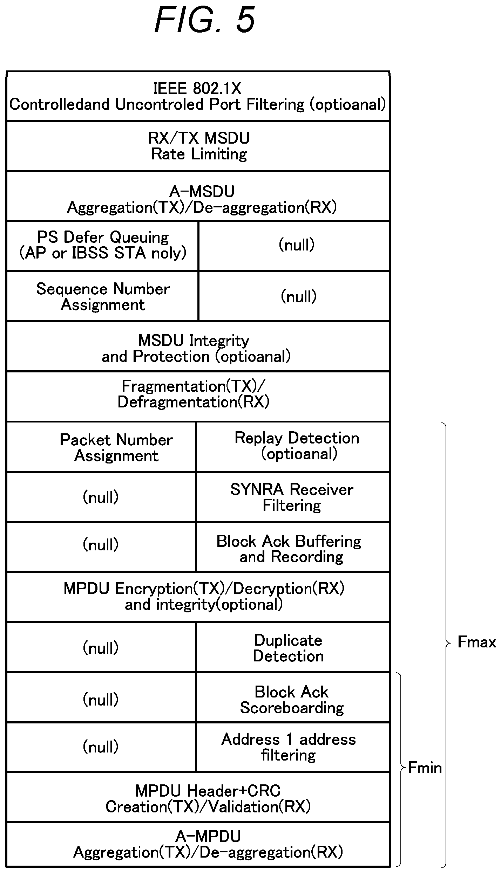

Fig. 5 is a diagram illustrating MAC functions that are applied to a relaying device according to the first embodiment. In the drawing, the MAC functions defined by IEEE 802.1X are taken as an example.

In the drawing, the relaying device 103 has MAC functions limited compared with those of the access point 102. Here, in the relaying device 103, minimum MAC functions Fmin are set, and maximum MAC functions Fmax are then set.

The minimum MAC functions Fmin include an aggregation MAC protocol data unit (A-MPDU) aggregation (Aggregation) (TX)/de-aggregation (De-Aggregation) (RX) function. Also, the minimum MAC functions Fmin include an MPDU header (Header) + cyclic redundancy check (CRC) creation/validation (Creation (TX) Validation (RX)) function. Further, the minimum MAC functions Fmin include address 1 address filtering (Address 1 address filtering). Furthermore, the minimum MAC functions Fmin include a block Ack scoreboarding (Block Ack Scoreboarding) function.

The maximum MAC functions Fmax include a duplicate detection (Duplicate Detection) function, in addition to the minimum MAC functions Fmin. Also, the maximum MAC functions Fmax include a MAC protocol data unit (MPDU) encryption/decryption and integrity (Encryption (TX)/Decryption (RX) and integrity) function. Further, the maximum MAC functions Fmax include a block Ack buffering and recording (Block Ack Buffering and Recording) function. Furthermore, the maximum MAC functions Fmax include a synthetic receiver address (SYNthetic Receiver Address: SYNRA) receiver filtering (Receiver Filtering) function. Also, the maximum MAC functions Fmax include a replay detection (Replay Detection) function.

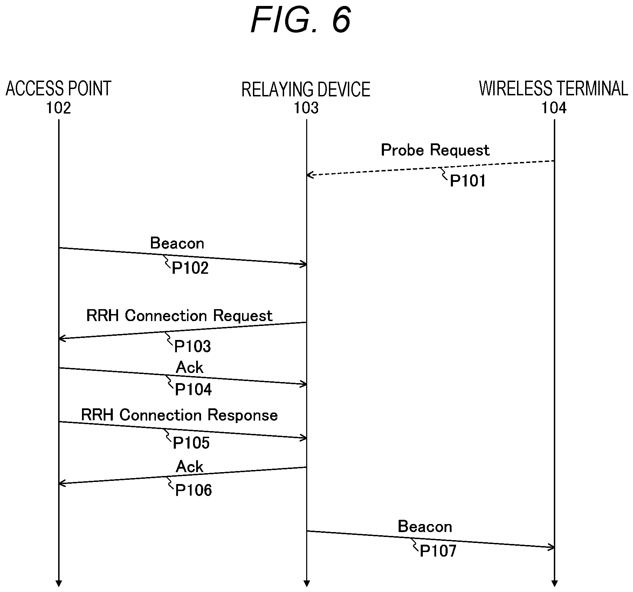

Fig. 6 is a sequence diagram illustrating a first example of procedures for establishing a connection between an access point and a relaying device according to the first embodiment. Note that this drawing illustrates an example in which the relaying device 103 is a relay-dedicated device.

In the drawing, it is assumed that the wireless terminal 104 transmits a signal related to a connection request for the access point 102 to the relaying device 103 (P101), before establishment of a connection between the access point 102 and the relaying device 103. At this point of time, a response to the connection request for the access point 102 is not returned to the wireless terminal 104.

The access point 102 broadcasts a signal including information indicating capability of connecting to the relaying device 103 (P102). This signal may be a management frame (Management frame) specified in IEEE 802.11, or may be a beacon frame (Beacon frame).

Having received the broadcast signal, the relaying device 103 transmits, to the access point 102, an RRH connection request (RRH Connection Request) signal including information indicating that the relaying device 103 is to be connected to the access point 102 (P103). The RRH connection request signal may be an action frame (Action frame) specified in IEEE 802.11. Having received the RRH connection request signal, the access point 102 may transmit an Ack signal to the relaying device 103 (P104).

Having received the RRH connection request signal, the access point 102 determines whether to establish a connection to the relaying device 103, on the basis of the information included in the RRH connection request signal.

The access point 102 that has determined whether to connect to the relaying device 103 transmits, to the relaying device 103, an RRH connection response (RRH Connection Response) signal including information regarding whether to connect to the relaying device 103 (P105). The RRH connection response signal may be an action frame specified in IEEE 802.11. Having received the RRH connection response signal, the relaying device 103 may transmit an Ack signal to the access point 102 (P106).

Having received the RRH connection response signal, the relaying device 103 connects to the access point 102 and starts an operation as the relaying device 103, on the basis of the information included in the RRH connection response signal. The relaying device 103 that has started operating as the relaying device 103 broadcasts a signal including information indicating that it is operating as the relaying device 103 (P107).

This signal may be a management frame specified in IEEE 802.11, or may be a beacon frame. This signal may include information regarding other operation parameters normally included in a beacon frame.

Note that, in a stage where the operation as the relaying device 103 has not been started yet, the relaying device 103 operates so as not to respond to a signal received from the wireless terminal 104, such as a probe request (Probe Request) signal, for example.

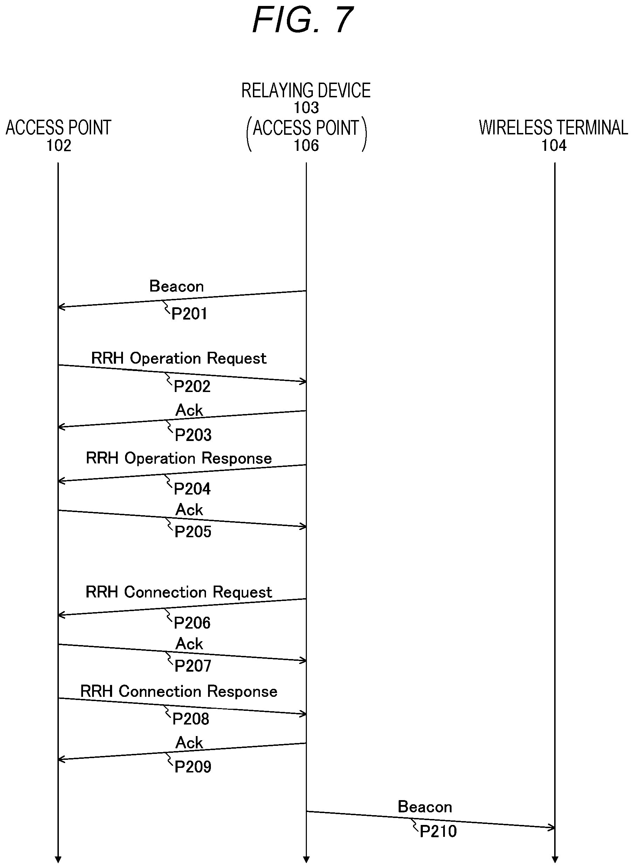

Fig. 7 is a sequence diagram illustrating a second example of procedures for establishing a connection between an access point and a relaying device according to the first embodiment. Note that this drawing illustrates an example in which the relaying device 103 is formed by a relaying operation of an access point 106.

In the drawing, the access point 106 capable of operating as the relaying device 103 broadcasts a signal including information indicating that the access point 106 is capable of operating as the relaying device 103 (P201). The signal to be broadcast may be a management frame specified in IEEE 802.11, or may be a beacon frame.

The access point 102 that has received this signal determines whether to request the access point 106 to operate as the relaying device 103. It is assumed that the access point 102 determines to request the access point 106 to operate as the relaying device 103. In doing so, the access point 102 transmits, to the access point 106, an RRH operation request (RRH Operation Request) signal including information indicating that the access point 102 requests the access point 106 to operate as the relaying device 103 (P202). The RRH operation request signal may be an action frame specified in IEEE 802.11. Having received the RRH operation request signal, the relaying device 103 may transmit an Ack signal to the access point 102 (P203).

Having received the RRH operation request signal, the access point 106 determines whether to operate as the relaying device 103, on the basis of the information included in the RRH operation request signal.

The access point 106 that has determined whether to operate as the relaying device 103 transmits, to the access point 102, an RRH operation response (RRH Operation Response) signal including information regarding whether to operate as the relaying device 103 (P204). The RRH operation response signal may be an action frame specified in IEEE 802.11. Having received the RRH operation response signal, the access point 102 may transmit an Ack signal to the access point 106 (P205).

The access point 106 that has determined to operate as the relaying device 103 and transmitted the RRH operation response signal determines whether to perform a sequence to establish, as the relaying device 103, a connection to the access point 102. This determination may be made on the basis of the capability (Capability) of the requested relay operation included in the RRH operation request signal. For example, the access point 106 may not perform the connection establishment sequence as the relaying device 103 in a case where there is no need to change the capability of the requested relay operation, but performs the connection establishment sequence as the relaying device 103 in a case where there is the need to change the capability.

It is assumed that the access point 106 determines to perform the sequence to establish, as the relaying device 103, a connection to the access point 102. In doing so, the access point 106 transmits, to the access point 102, an RRH connection request signal including information indicating that the access point 106 as the relaying device 103 is to be connected to the access point 102 (P206). Having received the RRH connection request signal, the access point 102 may transmit an Ack signal to the access point 106 (P207).

Having received the RRH connection request signal, the access point 102 transmits, to the access point 106, an RRH connection response signal including information regarding whether to establish a connection (P208). Having received the RRH connection response signal, the access point 106 may transmit an Ack signal to the access point 102 (P209).

The RRH connection request signal, the RRH connection response signal, and transmission and reception thereof are similar to those in the description of a case where the relaying device 103 is formed with a relay-dedicated device.

The access point 106 that has started operating as the relaying device 103 broadcasts a signal including information indicating that it is operating as the relaying device 103 (P210). This signal to be broadcast may be a management frame specified in IEEE 802.11, or may be a beacon frame. This signal to be broadcast may include information regarding other operation parameters included in a beacon frame.

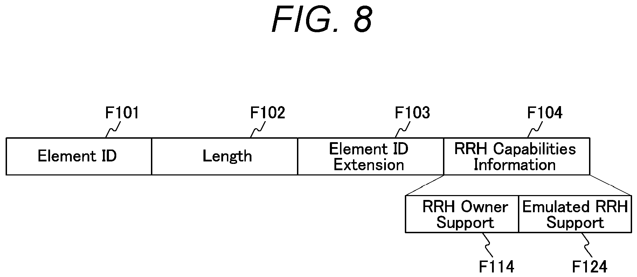

Fig. 8 is a diagram illustrating an example of the format of a signal including information that is broadcast from an access point according to the first embodiment.

In the drawing, this format formalizes a signal including information indicating that the access point 102 is capable of connecting to the relaying device 103, and a signal including information indicating that the access point 102 is capable of operating as the relaying device 103. This format is compatible with an element (Element) that is used in a beacon frame specified in IEEE 802.11.

This format can be applied to the signal to be broadcast in P102 in Fig. 6, and the signal to be broadcast in P201 in Fig. 7.

This format includes fields F101 to F104. The field F104 includes fields F114 and F124.

The field F101 includes an element identifier (Element ID). The field F102 includes a length (Length). The field F103 includes an element identifier extension (Element ID Extension). The field F104 includes RRH capabilities information (RRH Capabilities Information). The field F114 includes RRH owner support (RRH Owner Support). The field F124 includes emulated RRH support (Emulated RRH Support).

The element identifier and the element identifier extension include information indicating that this format is a format for notifying that this format supports a connection to the relaying device 103 and an operation as the relaying device 103. The length includes information regarding the length of this frame format. The RRH capabilities information includes the RRH owner support and the emulated RRH support. The RRH owner support includes information indicating that it supports a connection to the relaying device 103. The emulated RRH support includes information indicating that it supports an operation as the relaying device 103.

Note that the RRH capabilities information may include only either the RRH owner support or the emulated RRH support. In this case, the RRH capabilities information can indicate the presence or absence of support with 1-bit information.

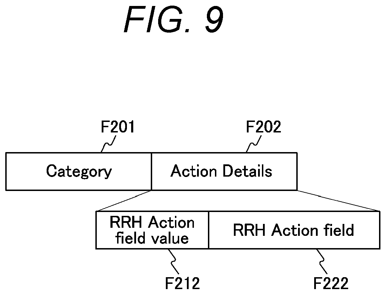

Fig. 9 is a diagram illustrating an example of the format of a signal including information that is used in establishing a connection between an access point and a relaying device according to the first embodiment.

In the figure, this format formalizes the RRH operation request signal and the RRH operation response signal. Also, this format formalizes the RRH connection request signal and the RRH connection response signal. This format is compatible with an action frame specified in IEEE 802.11.

This format can be applied to the signals to be transmitted in P103 and P105 in Fig. 6, and the signals to be transmitted in P202, P204, P206, and P208 in Fig. 7.

This format includes fields F201 and F202. The field F202 includes fields F212 and F222.

The field F201 includes a category (Category). The field F202 includes action details (Action Details). The field F212 includes an RRH action field value (RRH Action field value). The field F222 includes an RRH action field (RRH Action field).

The category includes information indicating that the present signal is a signal related to the relaying device 103. The action details include an RRH action field value and an RRH action field. The RRH action field value includes information indicating that the present signal is one of the RRH operation request signal, the RRH operation response signal, the RRH connection request signal, or the RRH connection response signal. The RRH action field includes information in each signal indicated by the RRH action field value.

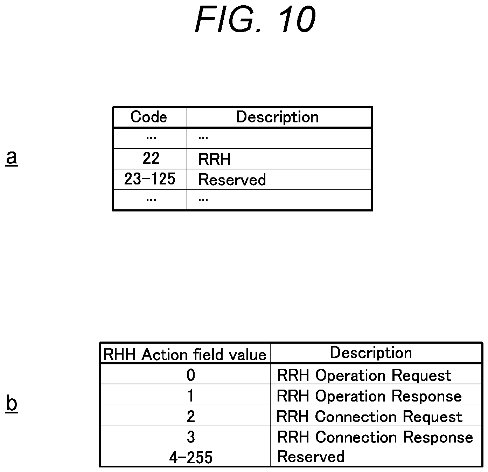

Fig. 10 is a diagram illustrating an example of a method for decoding information to be used in establishing a connection between an access point and a relaying device according to the first embodiment. Note that a in the drawing illustrates an example of a method for decoding information included in the category described above. In the drawing, b illustrates an example of a method for decoding information included in the RRH action field value described above.

In a of the drawing, to incorporate, into the category, information indicating that the present signal is a signal related to the relaying device 103, RRH is written in the description (Description) of a code (Code) 22.

In b of the drawing, in a case where the format in Fig. 9 indicates that information related to the RRH operation request signal is included, the RRH action field value is set to 0. In a case where the format in Fig. 9 indicates that information related to the RRH operation response signal is included, the RRH action field value is set to 1. In a case where the format in Fig. 9 indicates that information related to the RRH connection request signal is included, the RRH action field value is set to 2. In a case where the format in Fig. 9 indicates that information related to the RRH connection response signal is included, the RRH action field value is set to 3.

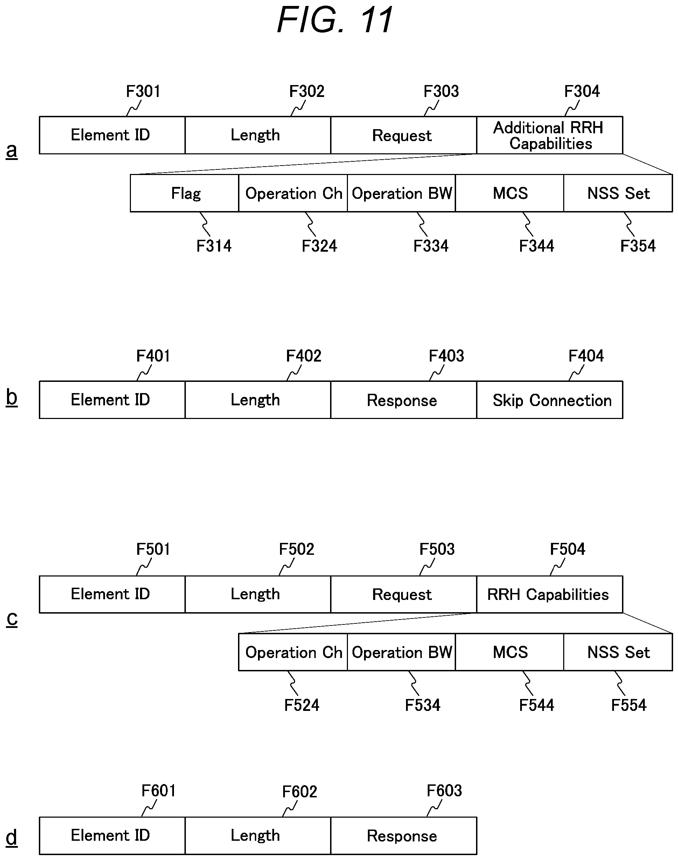

Fig. 11 is a diagram illustrating an example of the format of a signal included in the RRH action field that is used in establishing a connection between an access point and a relaying device according to the first embodiment.

In a of the drawing, this format can be applied to the RRH operation request signal to be transmitted in P202 in Fig. 7.

This format includes fields F301 to F304. The field F304 includes fields F314, F324, F334, F344, and F354.

The field F301 includes an element identifier. The field F302 includes a length. The field F303 includes a request (Request). The field F304 includes additional RRH capabilities (Additional RRH Capabilities). The field F314 includes a flag (Flag). The field F324 includes an operation Ch (Operation Ch). The field F334 includes an operation BW (Operation BW). The field F344 includes a modulation and coding scheme (MCS). The field F354 includes an NSS set (NSS Set).

The element identifier includes information indicating that this format is of the RRH operation request signal. The length includes information regarding the length of this format. The request includes information for requesting an operation as the relaying device 103. The additional RRH capabilities is included in a case where a capability different from the capability reported with a beacon (Beacon) by itself is requested.

The additional RRH capabilities include a flag, an operation Ch, an operation BW, an MCS, and an NSS set. The flag includes information indicating that a capability different from the capability reported with a beacon is requested. The operation Ch includes information about a requested operating frequency channel. The operation BW includes information about a requested operating frequency bandwidth. The MCS includes information about the maximum value of a requested use MCS. The NSS set includes information about a requested use spatial stream (Spatial Stream).

In b of the drawing, this format can be applied to the RRH operation response signal to be transmitted in P204 in Fig. 7.

This format includes fields F401 to F404. The field F401 includes an element identifier. The field F402 includes a length. The field F403 includes a response. The field F404 includes a skip connection (Skip Connection).

The element identifier includes information indicating that this format is of the RRH operation response signal. The length includes information regarding the length of this format. The response includes information regarding whether to accept a request for an operation as the relaying device 103. Note that, in a case where this response indicates that an operation is not to be performed as the relaying device 103, the access point 102 does not transmit the RRH connection request signal shown in Fig. 7, and the access point 106 does not transmit the RRH connection response signal shown in Fig. 7. The skip connection includes information regarding whether to execute a connection establishment sequence as the relaying device 103.

In c of Fig. 7, this format can be applied to the RRH connection request signal to be transmitted in P103 in Fig. 6, and the RRH connection request signal to be transmitted in P206 in Fig. 7.

This format includes fields F501 to F504. The field F504 includes fields F524, F534, F544, and F554.

The field F501 includes an element identifier. The field F502 includes a length. The field F503 includes a request. The field F504 includes RRH capabilities. The field F524 includes an operation Ch. The field F534 includes an operation BW. The field F544 includes an MCS. The field F554 includes an NSS set.

The element identifier includes information indicating that this format is of the RRH connection request signal. The length includes information regarding the length of this format. The request includes information for requesting a connection as the relaying device 103. This information can indicate that some of the functions related to wireless communication is limited compared with the access point 102. The RRH capabilities include information regarding the capability as the relaying device 103. The RRH capabilities include the operation Ch, the operation BW, the MCS, and the NSS set. The operation Ch includes information about the operating frequency channel. The operation BW includes information about the operating frequency bandwidth. The MCS includes information about the maximum value of the use MCS. The NSS set includes information of the use spatial stream.

In d of Fig. 7, this format can be applied to the RRH connection response signal to be transmitted in P105 in Fig. 6, and the RRH connection response signal to be transmitted in P208 in Fig. 7.

This format includes fields F601 to F603. The field F601 includes an element identifier. The field F602 includes a length. The field F603 includes a response.

The element identifier includes information indicating that this format is of the RRH connection response signal. The length includes information regarding the length of this format. The response includes information regarding whether to accept a connection request from the relaying device 103.

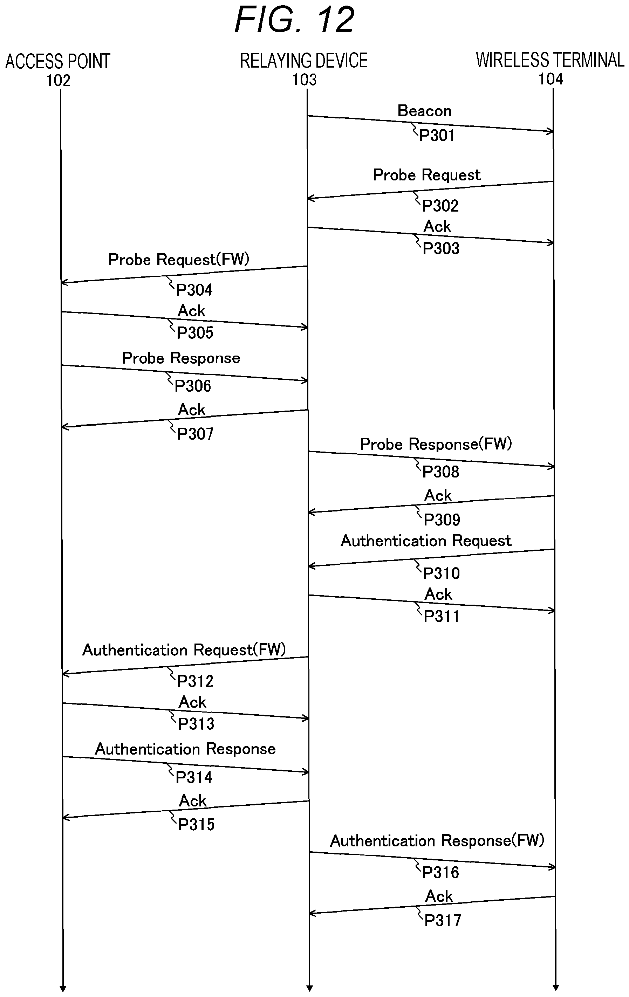

Fig. 12 is a sequence diagram illustrating procedures for establishing a connection between an access point and a wireless terminal via a relaying device according to the first embodiment.

In the drawing, the relaying device 103 (or the access point 106 operating as the relaying device 103) broadcasts a signal including information indicating that it is operating as the relaying device 103 (P301).

This signal to be broadcast may be a management frame specified in IEEE 802.11, or may be a beacon frame. This signal may include information regarding other operation parameters normally included in a beacon frame.

The wireless terminal 104 that has received this broadcast signal determines whether to connect to the relaying device 103 and the access point 102 of the network in which the relaying device 103 participates. The wireless terminal 104 that has determined to connect to the relaying device 103 and the access point 102 transmits, to the relaying device 103, a signal related to a request for a connection to the access point 102 (P302). This signal may be a probe request frame (Probe Request frame) specified in IEEE 802.11. At this point of time, the wireless terminal 104 stores its own MAC address in the transmitter address (Transmitter Address: TA) of this signal, and the MAC address of the relaying device 103 in the receiver address (Receiver Address: RA). The relaying device 103 that has received this signal may transmit an Ack signal to the wireless terminal 104 (P303).

Having received this signal, the relaying device 103 transfers a signal including the contents similar to the received signal, to the access point 102 (P304). In doing so, the relaying device 103 reconfigures the signal so that its own MAC address is stored in the transmitter address (TA) of the signal, and the MAC address of the access point 102 is stored in the receiver address (RA). Having received this signal, the access point 102 may transmit an Ack signal to the relaying device 103 (P305).

The access point 102 that has received the signal transferred from the relaying device 103 determines whether to connect to the wireless terminal 104. The access point 102 that has determined whether to connect to the wireless terminal 104 transmits a signal including information regarding whether to connect to the relaying device 103 (P306). This signal may be a probe response frame (Probe Response frame) specified in IEEE 802.11. At this point of time, the access point 102 stores its own MAC address in the transmitter address (TA) of this signal, and the MAC address of the relaying device 103 in the receiver address (RA). Having received this signal, the relaying device 103 may transmit an Ack signal to the access point 102 (P307).

Having received this signal, the relaying device 103 transfers a signal containing the contents similar to this signal, to the wireless terminal 104 (P308). In doing so, the relaying device 103 reconfigures the signal so that its own MAC address is stored in the transmitter address (TA) of the signal, and the MAC address of the wireless terminal 104 is stored in the receiver address (RA). The wireless terminal 104 that has received this signal may transmit an Ack signal to the relaying device 103 (P309).

Note that a specific MAC address specified in advance or another identifier may be used as the MAC address of the relaying device 103.

When a connection to the access point 102 via the relaying device 103 is established, the wireless terminal 104 performs wireless communication related to authentication with the access point 102 via the relaying device 103 (P310 to P317). The signal related to the authentication may be an authentication request frame (Authentication Request frame) and an authentication response frame (Authentication Response frame) specified in IEEE 802.11.

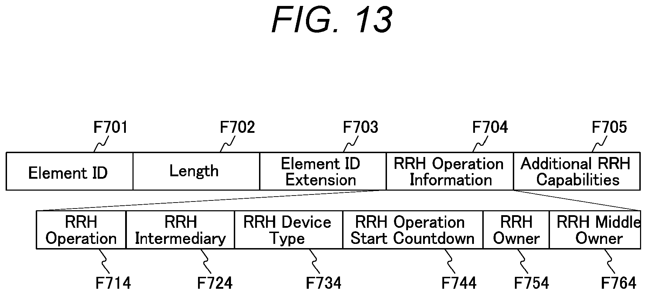

Fig. 13 is a diagram illustrating an example of the format of a signal including information that is broadcast from a relaying device according to the first embodiment.

In the drawing, this format formalizes a signal including information indicating that the relaying device 103 is operating as the relaying device 103. This format is compatible with an element that is used in a beacon frame specified in IEEE 802.11.

This format can be applied to the signal to be broadcast in P107 in Fig. 6, the signal to be broadcast in P210 in Fig. 7, and the signal to be broadcast in P301 in Fig. 12.

The format includes fields F701 to F705. The field F704 includes fields F714, F724, F734, F744, F754, and F764.

The field F701 includes an element identifier. The field F702 includes a length. The field F703 includes an element identifier extension. The field F704 includes RRH operation information (RRH Operation Information). The field F705 includes additional RRH capabilities. The field F714 includes an RRH operation (RRH Operation). The field F724 includes an RRH intermediary (RRH Intermediary). The field F734 includes an RRH device type (RRH Device Type). The field F744 includes an RRH operation start countdown (RRH Operation Start Countdown). The field F754 includes an RRH owner (RRH Owner). The field F764 includes an RRH middle owner (RRH Middle Owner).

The element identifier and the element identifier extension include information indicating that this format is a format for notifying that this format supports a connection to the relaying device 103 and an operation as the relaying device 103. The length includes information regarding the length of this frame format. The RRH operation information includes the RRH operation, the RRH intermediary, the RRH device type, the RRH operation start countdown, the RRH owner, and the RRH middle owner.

The RRH operation includes information indicating that the relaying device is operating as the relaying device 103. The RRH intermediary includes information indicating whether the relaying device is connected directly to the access point 102, or whether the relaying device is connected to the access point 102 via another relaying device. For example, if the information is 1-bit information and is 0, the information indicates that the relaying device is connected directly to the access point 102. If the information is 1, the information indicates that the relaying device is connected to the access point 102 via another relaying device. The RRH device type includes information about whether the relaying device is a relay-dedicated relaying device 103, or whether the relaying device is the access point 106 operating as the relaying device 103. For example, if the information is 1-bit information and is 0, the information indicates that the relaying device is the relay-dedicated relaying device 103. If the information is 1, the information indicates that the relaying device is the access point 102 operating as the relaying device 103. The RRH operation start countdown includes information regarding the time until the relaying device operates as the relaying device 103. Note that this information is stored only in a case where the access point 106 operates as the relaying device 103. The RRH owner includes information regarding the MAC address of the access point 102 to which the relaying device 103 is connected directly or to which the relaying device 103 is connected via another relaying device. The RRH middle owner includes information regarding the MAC address of another relaying device in the case of a connection via the another relaying device. Note that a specific MAC address specified in advance or another identifier may be used as the MAC address of the relaying device 103.

The additional RRH capabilities is included in a case where a capability different from the capability reported with a beacon by itself is used. The additional RRH capabilities are similar to the contents of the field F304 in a of Fig. 11.

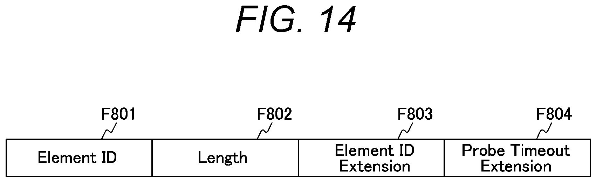

Fig. 14 is a diagram illustrating an example of the format of a signal including information regarding a connection request from a wireless terminal to an access point via a relaying device according to the first embodiment.

In the drawing, this format formalizes a signal related to a connection request from the wireless terminal 104 to the access point 102 via the relaying device 103.

This format can be applied to the probe request (Probe Request) signal to be transmitted from the wireless terminal 104 to the relaying device 103 in P302 in Fig. 12. Also, this format can be applied to the probe request (FW) signal to be transferred from the relaying device 103 to the access point 102 in P304.

The format includes fields F801 to F804. The field F801 includes an element identifier. The field F802 includes a length. The field F803 includes an element identifier extension. The field F804 includes a probe timeout extension (Probe Timeout Extension).

The element identifier and the element identifier extension include information indicating that this format relates to a connection request to the access point 102. The length includes information regarding the length of this frame format. The probe timeout extension includes information regarding an extension of a timeout from sending a probe request signal to receiving a probe response (Probe Response) signal. As a result, the timeout from the transmission of the probe request signal to the reception of the probe response signal can be extended. Thus, even in a case where it takes time to connect to the access point 102 via the relaying device 103, it is possible to prevent repetition of transmission of the probe request signal without waiting for the probe response signal.

Note that the probe request signal may be transmitted together with information regarding other operation parameters normally included in a probe request frame. The probe request signal may be included in a beacon signal that is transmitted by the relaying device 103. The wireless terminal 104 that has received the beacon signal including the probe request signal may determine a probe timeout (Probe Timeout) on the basis of the information included in the signal.

Also, the probe timeout extension may be included in the signal to be transmitted from the relaying device 103 in step S301 in Fig. 12. At this point of time, the relaying device 103 can determine the probe timeout, on the basis of the time taken from the reception of the probe request signal to the transmission of the probe response (FW) signal.

Further, the probe timeout extension may be included in the probe response signal to be transmitted from the access point 102 in step S306. At this point of time, the access point 102 can determine the probe timeout, on the basis of the time taken from the reception of the probe request (FW) signal to the transmission of the probe response signal.

In this manner, in the above first embodiment, a connection between the access point 102 and the wireless terminal 104 is established via the relaying device 103 in which some of the functions related to wireless communication are limited compared with the access point 102 to which the wireless terminal 104 is connected. Thus, even in a case where an installation location where a wired connection is not possible is included, it is possible to avoid delayed communication and extend the communication range of the wireless LAN, while reducing the load on the relay.

Also, the access point 102 establishes a connection to the relaying device 103 in which some of the functions related to wireless communication are limited compared with the access point 102. By doing so, the access point 102 can establish a connection to the wireless terminal 104 on the basis of a connection request from the wireless terminal 104 to the relaying device 103, and accommodate the wireless terminal 104 in a network in which the relaying device 103 participates.

Further, the relaying device 103 broadcasts information indicating that some of the functions related to wireless communication are limited compared with the access point 102. As a result, in establishing a connection between the access point 102 and the wireless terminal 104, the relaying device 103 in which some of the functions related to wireless communication are limited is interposed, and the communication range of the wireless LAN can be extended while delayed communication is prevented.

Furthermore, the wireless terminal 104 establishes a connection to the access point 102 on the basis of a request for a connection to the access point 102, the request being directed to the relaying device 103. Thus, the wireless terminal 104 can be connected to the access point 102 of the network in which the relaying device 103 participates, while enabling wireless communication directed to the relaying device 103.

### <2. Second Embodiment>

In the first embodiment described above, a connection between the access point 102 and the wireless terminal 104 is established via the relaying device 103 in which some of the functions related to wireless communication are limited compared with the access point 102 to which the wireless terminal 104 is connected. In the second embodiment, after a connection between the access point 102 and the wireless terminal 104 is established via the relaying device 103, a security setting process for communication between the access point 102 and the wireless terminal 104 via the relaying device 103 is performed.

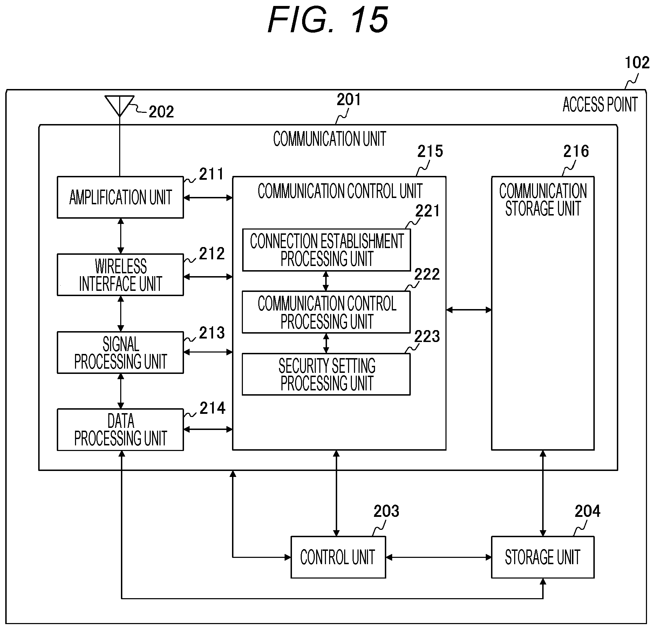

Fig. 15 is a block diagram illustrating an example configuration of an access point according to the second embodiment.

In the drawing, in the second embodiment, a security setting processing unit 223 is added to the access point 102 of the first embodiment described above. This drawing illustrates an example in which the security setting processing unit 223 is disposed in the communication control unit 215.

The security setting processing unit 223 generates a second encryption key for communication via the relaying device 103, on the basis of its own MAC address, the MAC address of the wireless terminal 104, and a first encryption key generated by the wireless terminal 104. The first encryption key is a unicast encryption key such as a pairwise transient key (PTK), for example, and the second encryption key is a multicast/broadcast encryption key such as a group temporal key (GTK), for example.

In this case, the communication unit 201 can transmit a security setting signal including its own MAC address to the wireless terminal 104 via the relaying device 103, to enable the wireless terminal 104 to generate the PTK. At this point of time, the access point 102 can set the relaying device 103 as the destination of the security setting signal including its own MAC address. Furthermore, the communication control unit 215 can control each block so as to perform generation of security-related information (PTK/GTK), and generation, transmission, and reception of a frame necessary for ensuring security.

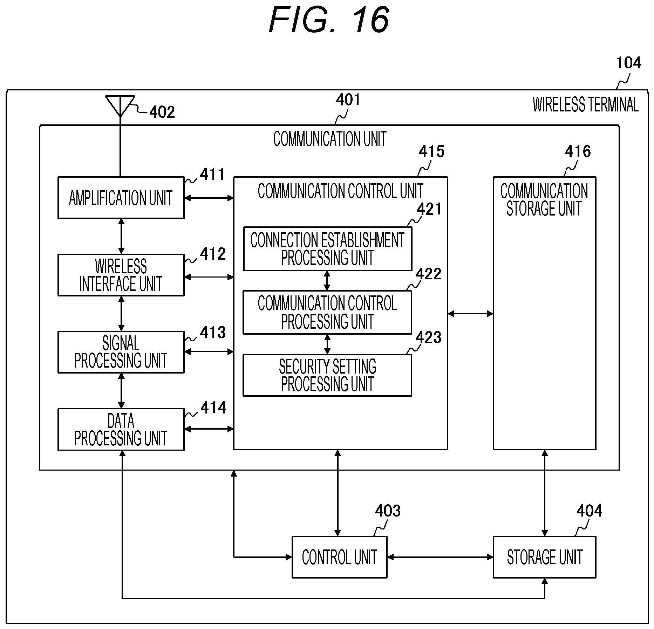

Fig. 16 is a block diagram illustrating an example configuration of a wireless terminal according to the second embodiment.

In the drawing, in the second embodiment, a security setting processing unit 423 is added to the wireless terminal 104 of the first embodiment described above. This drawing illustrates an example in which the security setting processing unit 423 is disposed in the communication control unit 415.

The security setting processing unit 423 generates an encryption key for communication via the relaying device 103, on the basis of its own MAC address and the MAC address of the access point 102. This encryption key is a unicast encryption key such as a PTK, for example.

In this case, the communication unit 401 can transmit a security setting signal including its own MAC address and a PTK to the access point 102 via the relaying device 103, to enable the access point 102 to generate a GTK. At this point of time, the wireless terminal 104 can set the relaying device 103 as the destination of the security setting signal including its own MAC address and the PTK. Furthermore, the communication control unit 415 can control each block so as to perform generation of security-related information (PTK), and generation, transmission, and reception of a frame necessary for ensuring security.

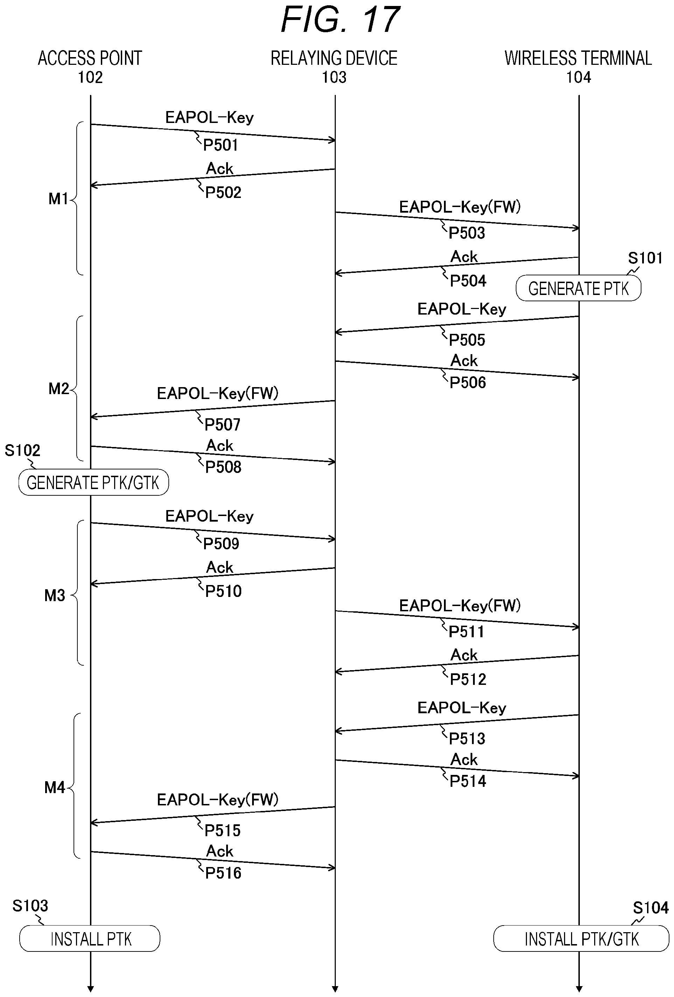

Fig. 17 is a sequence diagram illustrating encryption procedures in establishing a connection between an access point and a wireless terminal via a relaying device according to the second embodiment. In the encryption procedures, procedures for performing 4-way Handshake based on transmission and reception of messages M1 to M4 are taken as an example.

In the drawing, the access point 102 transmits an EAPOL key (EAPOL-Key) signal as the message M1 to the relaying device 103 (P501). Note that EAPOL is an abbreviation for Point-to-Point Protocol (PPP) Extensible Authentication Protocol Over LAN. At this point of time, the access point 102 stores its own MAC address in the transmitter address (TA) of this signal, and the MAC address of the relaying device 103 in the receiver address (RA). Having received this signal, the relaying device 103 may transmit an Ack signal to the access point 102 (P502).

Having received the EAPOL-Key signal, the relaying device 103 transfers an EAPOL key (FW) signal including contents similar to the EAPOL-Key signal, to the wireless terminal 104 (P503). In doing so, the relaying device 103 reconfigures the signal so that its own MAC address is stored in the transmitter address (TA) of the signal, and the MAC address of the wireless terminal 104 is stored in the receiver address (RA). The wireless terminal 104 that has received this signal may transmit an Ack signal to the relaying device 103 (P504).

The wireless terminal 104 that has received the EAPOL-Key (FW) signal generates a PTK (S101). The wireless terminal 104 generates the PTK, on the basis of a pairwise master key (PMK), an Anonce, a Snonce, the MAC address of the wireless terminal 104, and the MAC address of the access point 102.

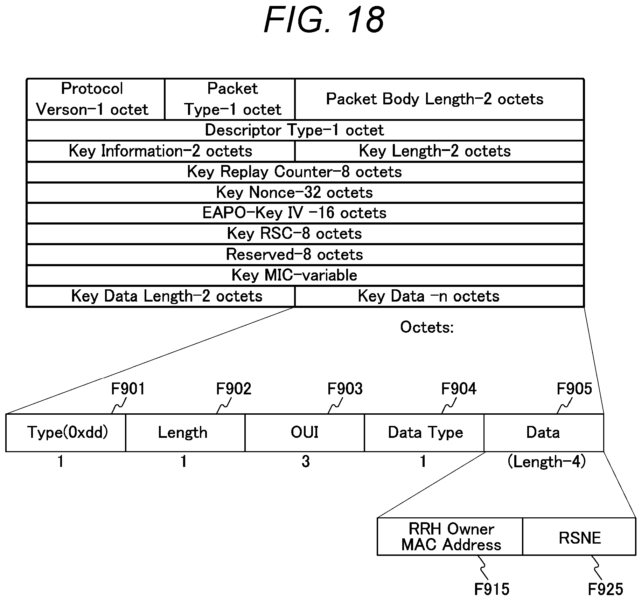

The PMK is generated from a master session key (MSK) by the wireless terminal 104. The Anonce is generated by the access point 102, and is transmitted from the access point 102 through the message M1. The Snonce is randomly generated by the wireless terminal 104. The MAC address of the access point 102 is reported through an RRH Owner MAC Address illustrated in Fig. 18 described later.

Next, the wireless terminal 104 transmits the EAPOL-Key signal as the message M2 to the relaying device 103 (P505). At this point of time, the access point 102 stores its own MAC address in the transmitter address (TA) of this signal, and the MAC address of the relaying device 103 in the receiver address (RA). The relaying device 103 that has received this signal may transmit an Ack signal to the wireless terminal 104 (P506).

Having received the EAPOL-Key signal, the relaying device 103 transfers an EAPOL key (FW) signal including contents similar to the EAPOL-Key signal, to the access point 102 (P507). In doing so, the relaying device 103 reconfigures the signal so that its own MAC address is stored in the transmitter address (TA) of the signal, and the MAC address of the access point 102 is stored in the receiver address (RA). Having received this signal, the access point 102 may transmit an Ack signal to the relaying device 103 (P508).

The access point 102 that has received the EAPOL-Key signal generates a PTK and a GTK (S102). The generation of the PTK and the GTK is compliant with the provisions of IEEE 802.11. In this case, the access point 102 generates the GTK, on the basis of a PMK/GMK (Group Master Key), an Anonce, a Snonce, the MAC address of the wireless terminal 104, and the MAC address of the access point 102.

The PMK/GMK is generated from the MSK by the access point 102. The Anonce is randomly generated by the access point 102. The Snonce is generated by the wireless terminal 104, and is transmitted from the wireless terminal 104 through the message M2. The MAC address of the wireless terminal 104 is reported through an RRH user MAC address (RRH User MAC Address).

Thereafter, like the message M1, the message M3 is transmitted from the access point 102 to the wireless terminal 104 via the relaying device 103 (P509 to P512). Also, like the message M2, the message M4 is transmitted from the wireless terminal 104 to the access point 102 via the relaying device 103 (P513 to P516).

Note that a specific MAC address specified in advance or another identifier may be used as the MAC address of the relaying device 103.

The access point 102 that has completed transmission and reception of the message M4 installs the PTK (S103). The wireless terminal 104 that has completed transmission and reception of the message M4 installs the PTK and the GTK (S104).

Fig. 18 is a diagram illustrating an example of the format of an EAPOL-Key signal that is used in encryption procedures according to the second embodiment.

In the drawing, this format formalizes the EAPOL-Key signals that are used in the messages M1 and M3. This format is compatible with an EAPOL key frame (EAPOL-Key frame) specified in IEEE 802.11.

The key data (Key Data) of the EAPOL key frame includes a KDE format specified in IEEE 802.11.

The KDE format includes fields F901 to F905. The field F905 includes fields F915 and F925.

The field F901 includes a type (Type). The field F902 includes a length. The field F903 includes an organizationally unique identifier (OUI). The field F904 includes a data type (Data Type). The field F905 includes data (Data). The field F915 includes an RRH owner MAC address (RRH Owner MAC Address). The field F925 includes a Robust Security Network Element (RSNE).

The RRH owner MAC address includes information regarding the MAC address of the access point 102. The RSNE is compliant with the provisions of IEEE 802.11.

The MAC address of the access point 102 as the transmitter reported through the RRH owner MAC address is used in generating a PTK in the wireless terminal 104 and generating an AAD in CCM encryption. CCM is an abbreviation for Counter with Cipher block chaining Message authentication code.

The format of the EAPOL key signals that are used in the messages M2 and M4 uses the EAPOL key frame specified in IEEE 802.11. The key data of the EAPOL key frame includes the KDE format specified in IEEE 802.11. The data of the KDE format uses a MAC address KDE format (MAC Address KDE format) specified in IEEE 802.11. Note that, in the EAPOL key signals that are used in the messages M2 and M4, an RRH user MAC address, instead of the RRH owner MAC address, can be stored in the field F915.

As described above, in the second embodiment, the access point 102 and the wireless terminal 104 share the MAC address of each other, on the basis of a security setting signal directed to the relaying device 103. As a result, while the relaying device 103 is set as the destination of the signal transmitted from the access point 102 and the signal transmitted from the wireless terminal 104, the access point 102 and the wireless terminal 104 can acquire the MAC address of each other. Thus, the access point 102 and the wireless terminal 104 can generate an encryption key on the basis of the MAC address of each other, and it is possible to secure the security of communication between the access point 102 and the wireless terminal 104 via the relaying device 103.

### <3. First Example Application>

In the first embodiment described above, the communication unit 201 that wirelessly connects the access point 102 and the wireless terminal 105 via the relaying device 103 is provided. In this first example application, however, a module other than a wireless communication module is provided in a wireless communication device.

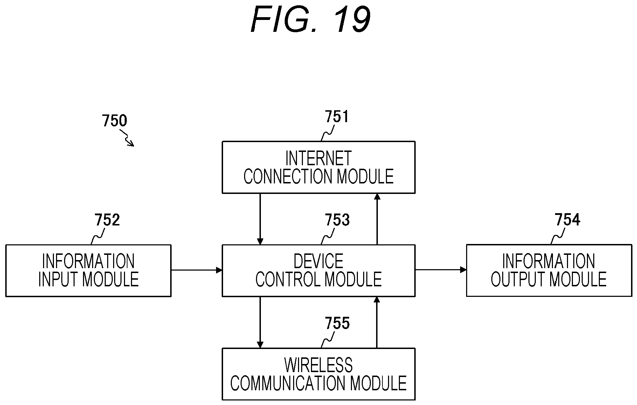

Fig. 19 is a block diagram illustrating an example configuration of a wireless communication device that is used as the first example application. Note that this wireless communication device 750 may be used for any of the access point 102, the relaying device 103, and the wireless terminal 104 described above.

In the drawing, the wireless communication device 750 includes an Internet connection module 751, an information input module 752, a device control module 753, an information output module 754, and a wireless communication module 755. Note that the wireless communication device 750 may include only the necessary modules.

The Internet connection module 751 is designed to implement functions such as a communication modem for connecting to the Internet, in a case of operating as an access point under the control of the device control module 753. The Internet connection module 751 connects a public communication line and the Internet via an Internet service provider.

The information input module 752 outputs information indicating an instruction that is input by the user, to the device control module 753. The information input module 752 includes push buttons, a keyboard, a touch panel, or the like. The information input module 752 may have a voice input function.

The device control module 753 includes a CPU, a read only memory (ROM), a random access memory (RAM), and the like. The device control module 753 executes a program stored in the ROM or the like, causes an application to function in a higher layer, and performs control to operate as a wireless communication device of an access point or a user terminal.

The information output module 754 outputs information regarding the operation state of the wireless communication device 750 or information obtained via the Internet, which is supplied from the device control module 753. The information output module 754 includes a display element such as a light emitting diode (LED), a liquid crystal panel, or an organic display, a speaker that outputs sound and music, and the like. The information output module 754 displays and reports information necessary for the user.

The wireless communication module 755 performs wireless communication, to transmit data supplied from the device control module 753 to another wireless communication device. The wireless communication module 755 performs wireless communication, to receive data transmitted from another wireless communication device, and output the received data to the device control module 753. The wireless communication module 755 may operate as the access point 102 in Fig. 1, may operate as the relaying device 103, or may operate as each of the wireless terminals 104 and 105.

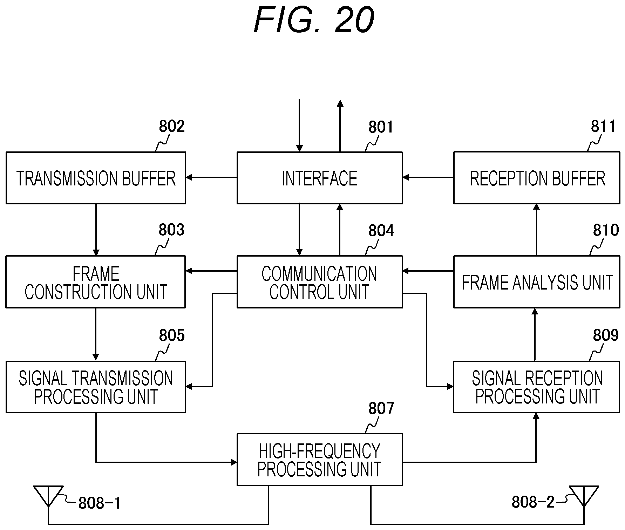

Fig. 20 is a block diagram illustrating an example configuration of the wireless communication module of the wireless communication device that is used as the first example application.

In the drawing, the wireless communication module 755 includes an interface 801, a transmission buffer 802, a frame construction unit 803, a communication control unit 804, and a signal transmission processing unit 805. Furthermore, the wireless communication module 755 includes a high-frequency processing unit 807, antennas 808-1 and 808-2, a signal reception processing unit 809, a frame analysis unit 810, and a reception buffer 811.

The interface 801 functions as an interface for exchanging, in a predetermined signal format, information that is input from the user and is supplied from the device control module 753, and data supplied from the Internet.

The interface 801 outputs the information and data supplied from the device control module 753 to the transmission buffer 802 and the communication control unit 804. The interface 801 outputs information and data supplied from the reception buffer 811 to the device control module 753.

In a case where the transmission buffer 802 has received information input from the user or data to be transmitted, the transmission buffer 802 temporarily stores the received information or data.

In accordance with an instruction from the communication control unit 804, the frame construction unit 803 constructs a data frame or an Ack frame, using the data accumulated in the transmission buffer 802 or Ack information supplied from the communication control unit 804. The data frame is a MAC layer protocol data unit (MPDU) frame or an A-MPDU (aggregated MPDU) frame, for example. The frame construction unit 803 outputs the constructed frame to the signal transmission processing unit 805.

The communication control unit 804 manages an operation for transmitting and receiving data and Ack information, on the basis of information supplied from the interface 801 and the frame analysis unit 810. The communication control unit 804 grasps the frame construction and the data transmission/reception state, and controls the frame construction unit 803, the signal transmission processing unit 805, and the signal reception processing unit 809.

The signal transmission processing unit 805 performs a process of encoding the data to be transmitted, and outputs the encoded data to the high-frequency processing unit 807.

The high-frequency processing unit 807 performs a predetermined high-frequency process on the data supplied from the signal transmission processing unit 805, and constructs a signal in each frequency band among a plurality of frequency bands. The high-frequency processing unit 807 transmits the constructed signal to the wireless communication device on the other side of the communication via the antennas 808-1 and 808-2.

Furthermore, the high-frequency processing unit 807 receives a signal in each frequency band transmitted from the wireless communication device on the other side of the communication via the antennas 808-1 and 808-2, and outputs the received signal to the signal reception processing unit 809.

The signal reception processing unit 809 processes the signal supplied from the high-frequency processing unit 807, and outputs the processed signal to the frame analysis unit 810.

The frame analysis unit 810 extracts a predetermined data frame from the received data, and extracts various kinds of information and data such as header information, a delimiter, and a payload from the Ack frame. The frame analysis unit 810 outputs the extracted information to the communication control unit 804, and outputs the extracted data to the reception buffer 811.

The reception buffer 811 stores the data supplied from the frame analysis unit 810.

The present technology can be applied to various products. For example, the wireless communication device 750 described above may be implemented as a mobile terminal such as a smartphone, a tablet personal computer (PC), a notebook PC, a portable game terminal, or a digital camera. Also, the wireless communication device 750 described above may be implemented as a fixed terminal such as a television receiver, a printer, a digital scanner, or a network storage, or as an in-vehicle terminal such as a car navigation device. Furthermore, the wireless communication device 750 may be implemented as a machine to machine communication (M2M) terminal, such as a smart meter, a vending machine, a remote monitoring device, or a point of sale (POS) terminal. Further, the wireless communication device 750 may be a wireless communication module (for example, an integrated circuit module formed with a single die) mounted on these terminals.

On the other hand, the wireless communication device 750 may be implemented as a wireless LAN access point (a wireless base station) having a router function or not having a router function, for example. Also, the wireless communication device 750 may be implemented as a mobile wireless LAN router. Further, the wireless communication device 750 may be a wireless communication module (for example, an integrated circuit module formed with a single die) mounted on these devices.

### <4. Second Example Application>

In the first example application described above, a module other than a wireless communication module is provided in a wireless communication device. In this second example application, however, a wireless communication device is applied to a smartphone.

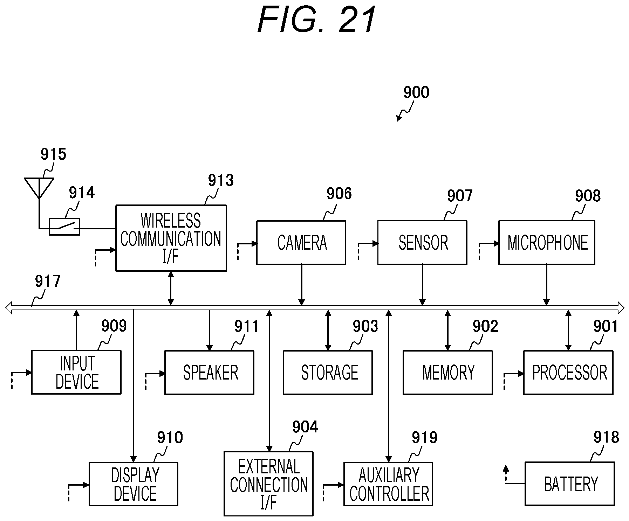

Fig. 21 is a block diagram illustrating an example configuration of a wireless communication device that is used as the second example application. Note that this smartphone 900 may be used for any of the access point 102, the relaying device 103, and the wireless terminal 104 described above.

In the drawing, the smartphone 900 includes a processor 901, a memory 902, a storage 903, an external connection interface 904, a camera 906, a sensor 907, a microphone 908, an input device 909, and a display device 910. Also, the smartphone 900 includes a speaker 911, a wireless communication interface 913, an antenna switch 914, an antenna 915, a bus 917, a battery 918, and an auxiliary controller 919.

The processor 901 may be a CPU or a system on chip (SoC), for example, and limits the functions of an application layer and other layers of the smartphone 900.

The memory 902 includes a RAM and a ROM, and stores a program to be executed by the processor 901, and data.

The storage 903 may include a storage medium such as a semiconductor memory or a hard disk.

The external connection interface 904 is an interface for connecting an external device such as a memory card or a universal serial bus (USB) device to the smartphone 900.

The camera 906 includes an imaging element such as a charge coupled device (CCD) or a complementary metal oxide semiconductor (CMOS), for example, and generates a captured image.

The sensor 907 includes a sensor group including a positioning sensor, a gyro sensor, a geomagnetic sensor, and an acceleration sensor, for example.

The microphone 908 converts sound input to the smartphone 900 into an audio signal.

The input device 909 includes a touch sensor that detects a touch on a screen of the display device 910, a keypad, a keyboard, buttons, or switches, for example, and receives an operation or information input from the user.

The display device 910 has a screen such as a liquid crystal display (LCD) or an organic light emitting diode (OLED) display, and converts an audio signal output from the smartphone 900 into sound.

The wireless communication interface 913 supports one or more of wireless LAN standards such as IEEE 802.11a, 11b, 11g, 11ac, and 11ad, and performs wireless communication.

In an infrastructure mode, the wireless communication interface 913 communicates with another device via the access point 102 of a wireless LAN. Furthermore, the wireless communication interface 913 communicates directly with other devices in an ad hoc mode or a direct communication mode such as Wi-Fi Direct.

Note that, in Wi-Fi Direct, one of the two terminals functions as the access point 102, which differs from the ad hoc mode, but communication is performed directly between those terminals.

The wireless communication interface 913 typically includes a baseband processor, a radio frequency (RF) circuit, and a power amplifier. The wireless communication interface 913 may be a one-chip module in which a memory that stores a communication control program, a processor that executes the program, and related circuits are integrated.

In addition to the wireless LAN scheme, the wireless communication interface 913 may support other types of wireless communication schemes such as a near field communication scheme, a proximity wireless communication scheme, and a cellular communication scheme.

The antenna switch 914 switches the connection destination of the antenna 915 among a plurality of circuits (for example, circuits for different wireless communication schemes) included in the wireless communication interface 913.

The antenna 915 includes a single antenna element or a plurality of antenna elements (for example, a plurality of the antenna elements constituting a multiple input multiple output (MIMO) antenna), and is used in transmission and reception of a wireless signal by the wireless communication interface 913.

Note that the smartphone 900 is not limited to the example in Fig. 21, and may include a plurality of the antennas (for example, an antenna for a wireless LAN, an antenna of a proximity wireless communication scheme, and the like). In that case, the antenna switch 914 may be excluded from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 913, and the auxiliary controller 919 to one another.

The battery 918 supplies electric power to each block of the smartphone 900 illustrated in Fig. 21, through a feed line partially indicated by a dashed line in the drawing.

The auxiliary controller 919 causes operation of the minimum necessary functions of the smartphone 900 in a sleep mode, for example.

In the smartphone 900, the communication control unit 415 described above with reference to Fig. 4 may be implemented in the wireless communication interface 913. Furthermore, at least some of these functions may be implemented in the processor 901 or the auxiliary controller 919.

Note that the smartphone 900 may also function as a wireless access point (software access point), as the processor 901 executes an access point function at an application level. Alternatively, the wireless communication interface 913 may have a wireless access point function.

Also, the smartphone 900 may operate as a wireless relaying device (software relaying device), as the processor 901 executes a relaying function at an application level.

Moreover, the smartphone 900 may include a biometric authentication unit (fingerprint authentication, palm-shape authentication, voice authentication, blood vessel authentication, face authentication, iris authentication, and retina authentication). At that time, the wireless communication interface 913 in which the communication control unit 415 described above with reference to Fig. 4 is implemented may be designed to receive power supply from the same battery 918 as at least one of the display device 910, the speaker 911, or the biometric authentication unit.

Furthermore, in the smartphone 900, information is displayed from at least one of the display device 910 or the speaker 911, on the basis of communication with an external device through the wireless communication interface 913. At that time, a result of synchronization according to the present technology may be output as information from at least one of the display device 910 or the speaker 911.

### <5. Third Example Application>

In the second example application described above, a wireless communication device is applied to a smartphone. In this third example application, however, a wireless communication device is applied to an in-vehicle device.

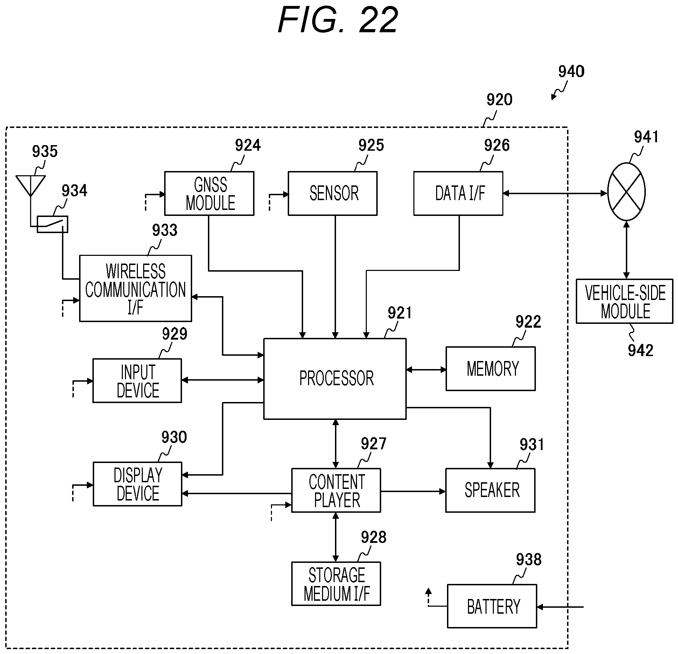

Fig. 22 is a block diagram illustrating an example configuration of a wireless communication device that is used as the third example application. Note that this wireless communication device may be used for any of the access point 102, the relaying device 103, and the wireless terminal 104 described above.

In the drawing, an in-vehicle device 920 includes a processor 921, a memory 922, a global navigation satellite system (GNSS) module 924, a sensor 925, a data interface 926, and a content player 927. Also, the in-vehicle device 920 includes a storage medium interface 928, an input device 929, a display device 930, a speaker 931, a wireless communication interface 933, an antenna switch 934, an antenna 935, and a battery 938.

The processor 921 may be a CPU or an SoC, for example, and controls a navigation function and other functions of the in-vehicle device 920. Furthermore, the processor 921 can also control the drive system of a vehicle, such as a brake, an accelerator, or steering, on the basis of information obtained through communication based on the present technology.

The memory 922 includes a RAM and a ROM, and stores a program to be executed by the processor 921, and data.

The GNSS module 924 uses a GNSS signal received from a GNSS satellite to measure the location (for example, the latitude, longitude, and altitude) of the in-vehicle device 920.

The sensor 925 includes a sensor group including a gyro sensor, a geomagnetic sensor, and an air pressure sensor, for example.

The data interface 926 is connected to an in-vehicle network 941 via a terminal (not illustrated), for example, and acquires data generated on the vehicle side, such as in-vehicle data.

The content player 927 reproduces content stored in a storage medium (for example, a compact disc (CD) or a digital versatile disc (DVD)) inserted into the storage medium interface 928.

The input device 929 includes a touch sensor that detects a touch on a screen of the display device 930, buttons, switches, or the like, for example, and receives an operation or information input from the user.

The display device 930 has a screen such as an LCD or an OLED display, and displays an image of a navigation function or content to be reproduced.

The speaker 931 outputs sound of the navigation function or the content to be reproduced.

Note that, in the in-vehicle device 920, the navigation function and the functions of the content player 927 are optional. The navigation function and the content player 927 may be excluded from the configuration of the in-vehicle device 920.

The wireless communication interface 933 supports one or more of the wireless LAN standards such as IEEE 802.11a, 11b, 11g, 11n, 11ac, and 11ad, and performs wireless communication. In an infrastructure mode, the wireless communication interface 933 communicates with another device via an access point of a wireless LAN. Furthermore, the wireless communication interface 933 communicates directly with another device in an ad hoc mode or a direct communication mode such as Wi-Fi Direct.

The wireless communication interface 933 typically includes a baseband processor, a RF circuit, and a power amplifier. The wireless communication interface 933 may be a one-chip module in which a memory that stores a communication control program, a processor that executes the program, and related circuits are integrated. In addition to the wireless LAN scheme, the wireless communication interface 933 may support other types of wireless communication schemes such as a near field communication scheme, a proximity wireless communication scheme, and a cellular communication scheme.

The antenna switch 934 switches the connection destination of the antenna 935 among a plurality of circuits included in the wireless communication interface 933.

The antenna 935 has a single antenna element or a plurality of antenna elements, and is used for transmission and reception of a wireless signal through the wireless communication interface 933.

Note that the in-vehicle device 920 is not limited to the example in Fig. 22, and may include a plurality of the antennas 935. In that case, the antenna switch 934 may be excluded from the configuration of the in-vehicle device 920.

In the in-vehicle device 920 illustrated in Fig. 22, the battery 938 may be provided through a feed line partially indicated by a dashed line in the drawing, and the communication control unit 415 described with reference to Fig. 4 may be mounted in the wireless communication interface 933. Furthermore, at least some of these functions may be implemented in the processor 921.

Also, the wireless communication interface 933 may operate as the wireless communication device 750 described above, and provide wireless connection to a terminal possessed by a user in the vehicle.

Furthermore, the present technology may be embodied as an in-vehicle system (or a vehicle) 940 including one or more of the blocks of the in-vehicle device 920 described above, the in-vehicle network 941, and a vehicle-side module 942. The vehicle-side module 942 generates vehicle-side data such as a vehicle speed, an engine speed, or failure information, and outputs the generated data to the in-vehicle network 941.

### <6. Fourth Example Application>

In the second example application described above, a wireless communication device is applied to a smartphone. In this fourth example application, however, the wireless communication device is applied to a wireless communication device having a wired communication interface.

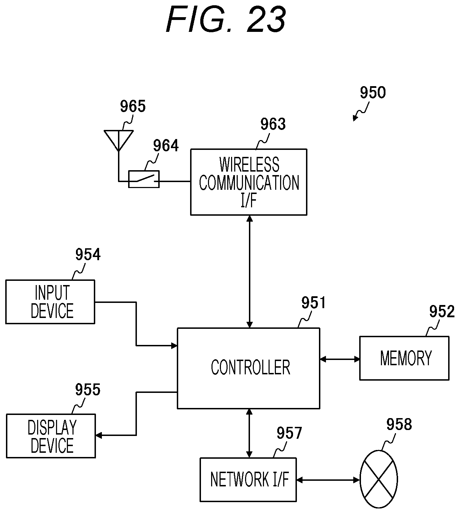

Fig. 23 is a block diagram illustrating an example configuration of a wireless communication device that is used as the fourth example application. Note that this wireless communication device may be used for any of the access point 102, the relaying device 103, and the wireless terminal 104 described above.

In the drawing, a wireless access point 950 includes a controller 951, a memory 952, an input device 954, a display device 955, a network interface 957, a wireless communication interface 963, an antenna switch 964, and an antenna 965.

The controller 951 may be a CPU or a digital signal processor (DSP), for example. The controller 951 activates various functions (for example, access restrictions, routing, encryption, firewall and log management, and the like) of the Internet Protocol (IP) layer and higher layers of the wireless access point 950.

The memory 952 includes a RAM and a ROM, and stores a program to be executed by the controller 951 and various kinds of control data (for example, a terminal list, a routing table, an encryption key, security settings, a log, and the like).

The input device 954 includes buttons and switches, for example, and receives an operation from the user.

The display device 955 includes an LED lamp and the like, and displays the operation status of the wireless access point 950.

The network interface 957 is a wired communication interface for the wireless access point 950 to connect to a wired communication network 958. The network interface 957 may have a plurality of connecting terminals. The wired communication network 958 may be a LAN such as Ethernet (registered trademark), or may be a WAN.

The wireless communication interface 963 supports one or more of the wireless LAN standards such as IEEE802.11a, 11b, 11g, 11n, 11ac, and 11ad, and provides a wireless connection as the access point 102 to a terminal in its vicinity.

The wireless communication interface 963 typically includes a baseband processor, a RF circuit, and a power amplifier.

The wireless communication interface 963 may be a one-chip module in which a memory that stores a communication control program, a processor that executes the program, and related circuits are integrated.

The antenna switch 964 switches the connection destination of the antenna 965 among a plurality of circuits included in the wireless communication interface 963.

The antenna 965 has a single antenna element or a plurality of antenna elements, and is used for transmission and reception of a wireless signal through the wireless communication interface 963.

In the wireless access point 950 illustrated in Fig. 23, the communication control unit 215 described above with reference to Fig. 2 or the communication control unit 315 described above with reference to Fig. 3 may be implemented in the wireless communication interface 963. Furthermore, at least some of these functions may be implemented in the controller 951.

Note that the embodiments described above show examples for embodying the present technology, and the matters in the embodiments and the matters specifying the invention in the claims have correspondence relationships, respectively. Likewise, the matters specifying the invention in the claims and matters with the same names in the embodiments of the present technology have correspondence relationships, respectively. However, the present technology is not limited to the embodiments, and can be embodied by making various modifications to the embodiments without departing from the scope of the present technology. Further, the effects described in the present specification are merely examples and are not restrictive, and other effects may be provided.

Furthermore, the procedures described in the above-described embodiments may be considered as a method including a series of these procedures, and may be considered as a program for causing this computer to execute the series of procedures and a recording medium that stores the program.

As the recording medium, a CD, a mini disc (MD), a DVD, a memory card, a Blu-ray (registered trademark) disc, or the like can be used, for example.

Note that, in the present specification, a system means an assembly of a plurality of components (devices, modules (parts), and the like), and it does not matter whether or not all the components are disposed in the same housing. Therefore, a plurality of devices that are housed in different housings and are connected via a network, and one device in which a plurality of modules is housed in one housing are systems.

Furthermore, the effects described in the present specification are merely examples and are not restrictive, and there may also be other effects.

Embodiments of the present technology are not limited to the above-described embodiments, and various modifications may be made without departing from the scope of the present technology.

For example, the present technology may be embodied as cloud computing in which one function is shared by a plurality of devices via a network and is processed in cooperation.

Further, each step described in the flowchart described above can be performed by one device or can be shared and performed by a plurality of devices.

Moreover, in a case where a plurality of processes is included in one step, the plurality of processes included in the one step can be performed by one device or by a plurality of devices in a shared manner.

Note that the present technology may also have the following configurations.
(1) A wireless communication device including:
   a connection establishment processing unit that performs a connection establishment process of establishing a first connection to a wireless terminal via a relaying device in which a function of referring to content of data in a frame to be used in wireless communication is limited; and
   a communication control processing unit that performs a process of controlling communication with the wireless terminal via the relaying device, after establishment of the first connection.
(2) The wireless communication device according to (1), in which
   the data in the frame includes a payload portion in the frame.
(3) The wireless communication device according to (1) or (2), in which
   the frame includes a media access control (MAC) frame.
(4) The wireless communication device according to (3), in which
   the data in the frame includes a MAC service data unit (MSDU) of the IEEE802.11 standard.
(5) The wireless communication device according to (3), in which
   a function of referring to data in a MAC frame to be used in an encryption process is limited in the relaying device.
(6) The wireless communication device according to any one of (1) to (5), in which
   the connection establishment processing unit performs the connection establishment process, on the basis of establishment of a second connection to the relaying device.
(7) The wireless communication device according to any one of (1) to (6), in which
   the connection establishment processing unit performs a process of generating information regarding whether to establish a connection in response to a connection request from the relaying device.
(8) The wireless communication device according to any one of (1) to (7), in which
   the connection establishment processing unit performs a request process on another access point capable of an operation as the relaying device, the request process being a process of requesting for an operation as the relaying device.
(9) The wireless communication device according to any one of (1) to (8), which broadcasts a signal including at least one piece of information indicating a capability of connecting to the relaying device or information indicating a capability of operating as the relaying device.
(10) The wireless communication device according to (6), in which wireless communication of a signal including information to be used in establishing the second connection is performed with the relaying device.
(11) The wireless communication device according to (6), which performs, with the wireless terminal, wireless communication of a signal including information to be used in establishing the first connection, on the basis of establishment of the second connection.
(12) The wireless communication device according to any one of (1) to (11), in which
   a destination of the signal including information to be used in establishing the first connection is the relaying device.
(13) The wireless communication device according to any one of (1) to (12), in which
   information to be used in establishing the first connection to the wireless terminal via the relaying device includes information related to an extension of a timeout from transmission of a signal related to a connection request from the wireless terminal to the access point to, reception of a signal related to a response to the connection request by the wireless terminal.
(14) The wireless communication device according to any one of (1) to (13), in which a security setting signal including a MAC address of the wireless communication device is transmitted to the wireless terminal for communication via the relaying device.
(15) The wireless communication device according to any one of (1) to (14), further including a security setting processing unit that generates a second encryption key for communication via the relaying device, on the basis of a MAC address of the wireless communication device, a MAC address of the wireless terminal, and a first encryption key generated by the wireless terminal.
(16) A wireless communication device including:
   a connection establishment processing unit that performs a connection establishment process of establishing a first connection to an access point, on the basis of a connection request indicating that a function of referring to content of data in a frame to be used in wireless communication is limited; and
   a relay processing unit that performs a process of relaying communication between a wireless terminal and the access point, after establishment of the first connection.
(17) The wireless communication device according to (16), in which
   the data in the frame includes a payload portion in the frame.
(18) The wireless communication device according to (16) or (17), in which
   the frame includes a MAC frame.
(19) The wireless communication device according to (18), in which
   the data in the frame includes an MSDU of the IEEE802.11 standard.
(20) The wireless communication device according to (18), in which
   a function of referring to data in the MAC frame to be used in an encryption process is limited.
(21) The wireless communication device according to any one of (16) to (20), which broadcasts a signal including information indicating that the wireless communication device is operating as a relaying device for communication between the wireless terminal and the access point.
(22) The wireless communication device according to any one of (16) to (21), which broadcasts a signal including information regarding an extension of a timeout from transmission of a signal related to a connection request from the wireless terminal to the access point, to reception of a signal related to a response to the connection request by the wireless terminal.
(23) The wireless communication device according to (21), which broadcasts an operation parameter of the access point and an operation parameter as the relaying device.
(24) The wireless communication device according to any one of (16) to (23), in which a connection establishment signal that is transmitted from the access point and indicates establishment of a connection between the access point and the wireless terminal is wirelessly transferred to the wireless terminal, and a connection establishment signal that is transmitted from the wireless terminal and indicates establishment of a connection between the access point and the wireless terminal is wirelessly transferred to the access point.
(25) The wireless communication device according to (24), in which
   the connection establishment signal includes a signal related to a connection request from the wireless terminal to the access point, and a signal related to a response from the access point to the connection request from the wireless terminal.
(26) The wireless communication device according to any one of (16) to (25), in which a security setting signal including a MAC address of the wireless terminal transmitted from the wireless terminal is transferred to the access point, and a security setting signal including a MAC address of the access point transmitted from the access point is transferred to the wireless terminal.
(27) A wireless communication device including:
   a connection establishment processing unit that performs a connection establishment process of establishing a first connection to an access point via a relaying device, on the basis of a connection request for a connection to the access point, the connection request being directed to the relaying device in which a function of referring to content of data in a frame to be used in wireless communication is limited; and
   a communication control processing unit that performs a process of controlling communication with the access point via the relaying device, after establishment of the first connection.
(28) The wireless communication device according to (27), in which
   the data in the frame includes a payload portion in the frame.
(29) The wireless communication device according to (27) or (28), in which
   the frame includes a MAC frame.
(30) The wireless communication device according to (29), in which
   the data in the frame includes an MSDU of the IEEE802.11 standard.
(31) The wireless communication device according to (29), in which
   a function of referring to data in the MAC frame to be used in an encryption process is limited.
(32) The wireless communication device according to any one of (26) to (31), in which wireless communication of a connection establishment signal to be used in establishing the first connection is performed with the relaying device.
(33) The wireless communication device according to (32), in which
   the connection establishment signal includes a signal related to a connection request to the access point, and a signal related to a response from the access point to the connection request.
(34) The wireless communication device according to any one of (26) to (33), in which
   the signal related to the connection request to the access point includes information regarding an extension of a timeout from transmission of the signal related to the connection request, to reception of the signal related to the response.
(35) The wireless communication device according to any one of (26) to (34), in which a security setting signal including a MAC address of the wireless communication device is transmitted to the access point for communication via the relaying device.
(36) The wireless communication device according to any one of (26) to (35), further including a security setting processing unit that generates an encryption key for communication via the relaying device, on the basis of a MAC address of the wireless communication device and a MAC address of the access point.
(37) A data structure including:
   a field including information indicating a format for reporting a capability of connecting to a relaying device in which a function of referring to content of data in a frame to be used in wireless communication is limited; and
   a field including information indicating a capability of connecting to the relaying device.
(38) A data structure including:
   a field including information indicating a format for reporting a capability of operating as a relaying device in which a function of referring to content of data in a frame to be used in wireless communication is limited; and
   a field including at least one piece of information indicating a capability of operating as the relaying device.
(39) A data structure including:
   a field including information indicating that a signal related to a relaying device in which a function of referring to content of data in a frame to be used in wireless communication is limited; and
   a field including information in the signal.
(40) A data structure including:
   a field including information indicating a format for reporting a capability of operating as a relaying device in which a function of referring to content of data in a frame to be used in wireless communication is limited; and
   a field including information indicating an operation as the relaying device is being performed.
(41) A data structure including:
   a field including information indicating that a signal related to a connection request to an access point; and
   a destination that is added to the field and is to a relaying device in which some of functions related to wireless communication is limited compared with the access point.

### REFERENCE SIGNS LIST

101 Wireless communication system
102 Access point
103 Relaying device
104, 105 Wireless terminal
201, 301, 401 Communication unit
202, 302, 402 Antenna
203, 303, 403 Control unit
204, 304, 404 Storage unit
211, 311, 411 Amplification unit
212, 312, 412 Wireless interface unit
213, 313, 413 Signal processing unit
214, 314, 414 Data processing unit
215, 315, 415 Communication control unit
216, 316, 416 Communication storage unit
221, 321, 421 Connection establishment processing unit
222, 422 Communication control processing unit
322 Relay processing unit
223, 423 Security setting processing unit

## Claims

1. A wireless communication device comprising:
a connection establishment processing unit that performs a connection establishment process of establishing a first connection to a wireless terminal via a relaying device in which a function of referring to content of data in a frame to be used in wireless communication is limited; and
a communication control processing unit that performs a process of controlling communication with the wireless terminal via the relaying device, after establishment of the first connection.

2. The wireless communication device according to claim 1, wherein
the frame includes a media access control (MAC) frame.

3. The wireless communication device according to claim 1, wherein
the connection establishment processing unit performs the connection establishment process, on a basis of establishment of a second connection to the relaying device.

4. The wireless communication device according to claim 3, wherein
the connection establishment processing unit performs a process of generating information regarding whether to establish a connection in response to a connection request from the relaying device.

5. The wireless communication device according to claim 3, wherein
the connection establishment processing unit performs a request process on another access point capable of an operation as the relaying device, the request process being a process of requesting for an operation as the relaying device.

6. The wireless communication device according to claim 1, which broadcasts a signal including at least one piece of information indicating a capability of connecting to the relaying device or information indicating a capability of operating as the relaying device.

7. The wireless communication device according to claim 1, wherein wireless communication of a signal including information to be used in establishing the second connection is performed with the relaying device.

8. The wireless communication device according to claim 7, which performs, with the wireless terminal, wireless communication of a signal including information to be used in establishing the first connection, on a basis of establishment of the second connection.

9. The wireless communication device according to claim 8, wherein
a destination of the signal including information to be used in establishing the first connection is the relaying device.

10. A wireless communication device comprising:
a connection establishment processing unit that performs a connection establishment process of establishing a first connection to an access point, on a basis of a connection request indicating that a function of referring to content of data in a frame to be used in wireless communication is limited; and
a relay processing unit that performs a process of relaying communication between a wireless terminal and the access point, after establishment of the first connection.

11. The wireless communication device according to claim 10, wherein
the frame includes a MAC frame.

12. The wireless communication device according to claim 10, which broadcasts a signal including information indicating that the wireless communication device is operating as a relaying device for communication between the wireless terminal and the access point.

13. The wireless communication device according to claim 12, which broadcasts an operation parameter of the access point and an operation parameter as the relaying device.

14. The wireless communication device according to claim 10, wherein a connection establishment signal that is transmitted from the access point and indicates establishment of a connection between the access point and the wireless terminal is wirelessly transferred to the wireless terminal, and a connection establishment signal that is transmitted from the wireless terminal and indicates establishment of a connection between the access point and the wireless terminal is wirelessly transferred to the access point.

15. The wireless communication device according to claim 14, wherein
the connection establishment signal includes a signal related to a connection request from the wireless terminal to the access point, and a signal related to a response from the access point to the connection request from the wireless terminal.

16. A wireless communication device comprising:
a connection establishment processing unit that performs a connection establishment process of establishing a first connection to an access point via a relaying device, on a basis of a connection request for a connection to the access point, the connection request being directed to the relaying device in which a function of referring to content of data in a frame to be used in wireless communication is limited; and
a communication control processing unit that performs a process of controlling communication with the access point via the relaying device, after establishment of the first connection.

17. The wireless communication device according to claim 16, wherein
the frame includes a MAC frame.

18. The wireless communication device according to claim 16, wherein wireless communication of a connection establishment signal to be used in establishing the first connection is performed with the relaying device.

19. The wireless communication device according to claim 18, wherein
the connection establishment signal includes a signal related to a connection request to the access point, and a signal related to a response from the access point to the connection request.

20. The wireless communication device according to claim 19, wherein
the signal related to the connection request to the access point includes information regarding an extension of a timeout from transmission of the signal related to the connection request, to reception of the signal related to the response.
